# EUROPEAN PATENT SPECIFICATION

(11) **EP 2 987 707 B1**
(45) Date of publication and mention of the grant of the patent: **15.03.2017**
(21) Application number: 15177178.9
(22) Date of filing: 17.07.2015
(51) Int. Cl.: B62H 5/06, B60R 25/04, B60R 25/20, E05B 47/00

(54) **LOCK SYSTEM AND STRADDLE-TYPE VEHICLE**
VERRIEGELUNGSSYSTEM UND GRÄTSCHSITZFAHRZEUG
SYSTÈME DE SERRURE ET VÉHICULE DE TYPE À CALIFOURCHON

(30) Priority: 21.08.2014 JP 2014168685; 15.12.2014 JP 2014253475
(43) Date of publication of application: 24.02.2016
(73) Proprietor: Yamaha Hatsudoki Kabushiki Kaisha, Iwata-shi, Shizuoka 438-8501 (JP)
(72) Inventor: TAKEHANA, Daiki, Iwata-shi, Shizuoka 438-8501 (JP)
(74) Representative: Grünecker Patent- und Rechtsanwälte PartG mbB

(56) References cited:
- EP-A2- 1 088 951
- JP-A- 2005 273 189
- JP-A- 2008 101 372
- US-A- 4 908 605

## Description

The present invention relates to a lock system equipped with a lock device and a multiple key, and to a straddle-type vehicle equipped with a lock system.

### Description of the Related Art

A lock system provided with a protection mechanism for protecting the keyhole of a lock device was known in the past. For example, Japanese Laid-Open Patent Application 2006-144288 discloses a lock system comprising a mechanism for protecting the keyhole of a cylinder lock with a shutter. The lock system comprises a lock device and a multiple key. The lock device comprises a shutter, a magnet lock, and a rotor. The multiple key comprises a knob, a cylinder key, and a magnet key. The magnet lock can be unlocked by inserting a magnet key into the rotor. When the magnet key has been inserted into the rotor, the shutter is moved from a closed position to an open position by turning the magnet key and the rotor. When the shutter moves to the open position, the keyhole of the cylinder lock is opened, allowing the cylinder key to be inserted into the keyhole.

With the above-mentioned conventional multiple key, however, the magnet key and the cylinder key are provided to the knob. More specifically, the cylinder key extends in a first direction from the knob. The magnet key protrudes in a second direction that is different from the first direction. That is, the magnet key and the cylinder key face in mutually different directions with respect to the knob. Accordingly, the user has to switch the holding position of the knob when operating the shutter with the magnet key and when inserting the cylinder key into the keyhole of the cylinder lock.

For example, when riding a straddle-type vehicle comprising the above-mentioned conventional lock system, the user uses the magnet key to operate the shutter, switches the holding position of the multiple key, and then inserts the cylinder key into the keyhole of the cylinder lock. More specifically, at first the user holds the knob so that the magnet key faces the rotor. The magnet key is inserted into the rotor, and the magnet key and the rotor are turned to move the shutter to the open position. The user then switches the holding position of the knob so that the cylinder key is facing the keyhole of the cylinder lock, and then inserts the cylinder key into the keyhole of the cylinder lock.

With the above-mentioned conventional lock system, the user has to switch the holding position of the multiple key when operating the cylinder key after operating the shutter. Therefore, there will be situations when the lock device cannot be smoothly operated with the multiple key.
Document EP 1088951 A2 discloses a lock system according to the preamble of claim 1.

It is an object of the present invention to provide a lock system that affords smooth operation of a lock device with a multiple key, and a straddle-type vehicle comprising the lock system.

According to the present invention said object is solved by a look system having the features of independent claim 1. Preferred embodiments are laid down in the dependent claims.

The lock system pertaining to an embodiment comprises a lock device having a plurality of locks, and a multiple key that combines the lock/unlock functions for a plurality of locks, wherein the lock device comprises a casing having a first opening and a second opening, a cylinder lock that includes one end in which is formed a first keyhole into which the multiple key can be inserted, and that is covered by the casing so that the first keyhole overlaps the first opening when viewed in a first axial direction of the first keyhole, and a shutter mechanism having a first shutter that is able to move between a closed position at which the first keyhole is blocked off and an open position at which the first keyhole is open, and a shutter lock capable of operating the first shutter. The shutter lock comprises a rotor that includes one end in which is formed a second keyhole into which the multiple key can be inserted, that is covered by the casing so that the second keyhole overlaps the second opening when viewed in a second axial direction, and that is able to rotate in the peripheral direction of the second axis, and a first magnet capable of switching positions between a restricted position at which the rotation of the rotor is restricted, and a permitted position at which the rotation of the rotor is permitted. The rotor is able to rotate in a first state and a second state. In the first state the first shutter is positioned in the closed position, and in the second state the first shutter is positioned in the open position. The multiple key comprises a grip, a cylinder key that extends from the grip and that is inserted into the first keyhole and is able to lock and unlock the cylinder lock, and a magnet key that is provided around the proximal end of the cylinder key, has a base component in which a rotational axis is set in the direction in which the cylinder key extends and a second magnet provided to the base component, and with which the position of the first magnet can be switched by the magnetic force of the second magnet from the restricted position to the permitted position. The cylinder key can be inserted into the second keyhole of the rotor. In a state in which the cylinder key has been inserted into the second keyhole of the rotor, the magnet key can switch the position of the first magnet of the shutter lock from the restricted position to the permitted position. In a state in which the cylinder key has been inserted into the second keyhole of the rotor, the rotor can be rotated from the first state to the second state by turning the multiple key. (First configuration)

With the above-mentioned first configuration, the first keyhole of the cylinder lock is opened by moving the first shutter by turning the magnet key in a state in which the cylinder key has been inserted into the second keyhole of the rotor. Also, the cylinder lock can be operated by pulling the cylinder key out of the second keyhole of the rotor and inserting the cylinder key into the first keyhole of the cylinder lock. The user can operate both the rotor and the cylinder lock while holding the multiple key in the orientation of inserting the cylinder key. Therefore, the lock device can be operated without switching the holding position of the multiple key, so the lock device can be operated smoothly with the multiple key.

In the first configuration of the lock system pertaining to a preferred embodiment, the multiple key has a shape that allows engagement with the second keyhole of the rotor, and in a state in which the cylinder key has been inserted into the second keyhole and the multiple key has been engaged with the second keyhole, the rotor can be rotated from the first state to the second state by turning the multiple key. (Second configuration)

With the above-mentioned second configuration, in a state in which the cylinder key has been inserted into the second keyhole and the multiple key has been engaged with the second keyhole of the rotor, the first keyhole of the cylinder lock is opened by moving the first shutter by turning the multiple key. Also, the cylinder lock can be operated by pulling the cylinder key out of the second keyhole of the rotor and inserting the cylinder key into the first keyhole of the cylinder lock. The user can operate both the rotor and the cylinder lock while holding the multiple key in the orientation of inserting the cylinder key. Therefore, the lock device can be operated without switching the holding position of the multiple key, so the lock device can be operated smoothly with the multiple key.

In the first or second configuration of the lock system pertaining to a preferred embodiment, in a state in which the cylinder key has been inserted into the second keyhole, the cylinder key can be brought into contact with the peripheral walls of the second keyhole, and the rotor can be rotated from the first state to the second state, by turning the cylinder key. (Third configuration).

With the above-mentioned third configuration, since the orientation of the multiple key is determined by inserting the cylinder key into the second keyhole, the operation of inserting the cylinder key is more stable. This also allows the lock device to be operated more smoothly with the multiple key.

In any of the first to third configurations of the lock system pertaining to a preferred embodiment, the base component of the magnet key has a convex component that protrudes toward the periphery of the rotational axis, the second keyhole of the rotor has a concave component that engages with the convex component, and in a state in which the cylinder key has been inserted into the second keyhole, the convex component can be brought into contact with the peripheral walls of the concave component of the second keyhole, and the rotor can be rotated from the first state to the second state, by turning the cylinder key.

### (Fourth configuration).

With the above-mentioned fourth configuration, the rotor and the magnet key are securely mated together by the convex component of the magnet key and the concave component of the rotor. Therefore, the rotor and the magnet key are engaged more stably, and the rotor can be operated more reliably.

In any of the first to fourth configurations of the lock system pertaining to a preferred embodiment, the second axial direction of the second keyhole extends in the first axial direction of the first keyhole. (Fifth configuration).

With the above-mentioned fifth configuration, the second axial direction of the concave component of the rotor extends in the same direction as the first axial direction of the first keyhole of the cylinder lock. The direction in which the convex component of the magnet key is engaged with the concave component of the rotor is the same as the direction in which the cylinder key is inserted into the first keyhole of the cylinder lock. The user can operate the rotor and the cylinder lock in a state of keeping the cylinder key as faces in the same direction. Therefore, the lock device can be operated in a state in which the cylinder key is facing in the same direction, without switching the holding position of the multiple key.

In any of the first to fifth configurations of the lock system pertaining to a preferred embodiment, the second magnet is disposed so that the direction in which the poles extend faces in the direction in which the cylinder key extends, and the first magnet of the shutter lock is disposed facing in the second axial direction so as to correspond to the second magnet. (Sixth configuration).

With the above-mentioned sixth configuration, the magnet key is disposed so that the poles of the second magnet extend in the direction in which the cylinder key extends. The first magnet of the shutter lock is disposed on the rotor so as to correspond to the second magnet. Therefore, the first magnet and the second magnet are disposed facing in the same direction as the direction in which the convex component of the magnet key is engaged with the concave component of the rotor, which facilitates disposition of the first magnet and second magnet.

In any of the first to sixth configurations of the lock system pertaining to a preferred embodiment, the second magnet is disposed so that the direction in which the poles extend intersects the direction in which the cylinder key extends, and the first magnet of the shutter lock is disposed facing in a direction that intersects the second axial direction so as to correspond to the second magnet. (Seventh configuration).

With the above-mentioned seventh configuration, the magnet key is disposed so that the poles of the second magnet extend in a direction that intersects the direction in which the cylinder key extends. The first magnet of the shutter lock is disposed around the rotor so as to correspond to the second magnet. Therefore, even if the rotor is made smaller, there will still be enough space to dispose the second magnet, and this affords a more compact lock device.

In any of the first to seventh configurations of the lock system pertaining to a preferred embodiment, the magnet key is provided to the proximal end of the cylinder key.

### (Eighth configuration).

With the above-mentioned eighth configuration, the cylinder key and the cylinder key insertion hole serve as a guide during engagement between the magnet key and the concave component of the rotor. Therefore, the magnet key can be engaged more easily with the concave component of the rotor. Also, since the magnet key and the concave component of the rotor are put together more reliably by being guided by the cylinder key and the cylinder key insertion hole, the engaged state of the magnet key and the concave component of the rotor is more stable, and the rotor can be operated more reliably.

In any of the first to eighth configurations of the lock system pertaining to a preferred embodiment, the magnet key is provided integrally with the grip of the cylinder key. (Ninth configuration).

With the above-mentioned ninth configuration, since the magnet key is provided integrally with the grip, the rotational force exerted by the user on the grip can be directly transmitted to the magnet key.

In any of the first to ninth configurations of the lock system pertaining to a preferred embodiment, the rotational axis of the magnet key overlaps the rotational axis of the cylinder key. (Tenth configuration).

With the above-mentioned tenth configuration, since the rotational axis of the magnet key overlaps the rotational axis of the cylinder key, the rotational operation of the cylinder key and the rotational operation of the magnet key can be performed on the same rotational axis.

In any of the first to tenth configurations of the lock system pertaining to a preferred embodiment, the grip has an attachment hole formed at a location that is offset with respect to the center axis of the cylinder key. (Eleventh configuration).

With the above-mentioned eleventh configuration, the grip of the multiple key has an attachment hole at a location that is offset with respect to the center axis of the cylinder key. Therefore, the user can easily distinguish the orientation of the multiple key. The "orientation of the multiple key" is an orientation of the multiple key in which the cylinder key can be inserted into the cylinder key insertion hole and the concave component constituting the second keyhole of the rotor, and an orientation of the multiple key in which the cylinder key cannot be inserted into the cylinder key insertion hole or the concave component of the rotor. Therefore, when the user inserts the cylinder key into the cylinder key insertion hole and the concave component of the rotor, he is unlikely to mistake the orientation of the multiple key, so the operation of the lock device by the multiple key can be performed smoothly. Also, the orientation of the multiple key can be distinguished more clearly if an article is attached to the attachment hole.

In any of the first to eleventh configurations of the lock system pertaining to a preferred embodiment, an orientation in which the cylinder key has been inserted into the second keyhole of the rotor is called a first orientation, an orientation in which the cylinder key has been turned 180 degrees around its center axis with respect to the first orientation and has been inserted into the second keyhole of the rotor is called a second orientation, and in both the first orientation and the second orientation, the first magnet and the second magnet are disposed so that the second magnet of the magnet key switches the position of the first magnet of the shutter lock from the restricted position to the permitted position.

### (Twelfth configuration).

With the above-mentioned twelfth configuration, the shutter can be released regardless of whether the shutter key is in the first orientation or the second orientation with respect to the cylinder key insertion hole. The cylinder key can be inserted more easily into the cylinder key insertion hole, and the operation of the lock device by the multiple key can be performed smoothly.

In any of the first to twelfth configurations of the lock system pertaining to a preferred embodiment, the rotor is able to move between a closed position at which the second keyhole is blocked off and an open position at which the second keyhole is open, and has a second shutter that moves from the closed position to the open position when the cylinder key is inserted into the second keyhole. (Thirteenth configuration).

With the above-mentioned thirteenth configuration, the second shutter blocks off the second keyhole, and the second keyhole is opened when the cylinder key is inserted into the second keyhole. Therefore, it is less likely that dust or other foreign matter will find its way in from the second keyhole.

In any of the first to thirteenth configurations of the lock system pertaining to a preferred embodiment, the direction in which the cylinder key is inserted into the second keyhole is called the insertion direction, and the casing comprises a bottomed container that extends in the insertion direction from the periphery of the second keyhole. (Fourteenth configuration).

With the above-mentioned fourteenth configuration, the casing comprises a bottomed container that extends in the insertion direction from the periphery of the second keyhole. Therefore, if any dust or other foreign matter does find its way in through the second keyhole, it will be held in the container.

The straddle-type vehicle pertaining to a preferred embodiment comprises the lock system according to any of the first to fourteenth configurations.

With the straddle-type vehicle pertaining to a preferred embodiment, the user can operate the rotor and the cylinder lock while holding the multiple key in the orientation of inserting the cylinder key. Therefore, the user can operate the lock device without switching the holding position of the multiple key, and the lock device can be smoothly operated with the multiple key.

### BRIEF DESCRIPTION OF THE DRAWINGS

FIG. 1 is a left-side oblique view of the entire configuration of a motorcycle pertaining to Embodiment 1;
FIG. 2 is a rear view of a rear cover as seen by a rider sitting on a seat;
FIG. 3 is an oblique view of a lock device;
FIG. 4 is a side view of a multiple key;
FIG. 5 is a front cross section cut along the X-X line in FIG. 4;
FIG. 6A is a plan view of a lock device;
FIG. 6B is a plan view of a lock device;
FIG. 7 is a plan view of a lock device when a first cover has been removed;
FIG. 8 is a front cross section cut along the Y-Y line in FIG. 6B;
FIG. 9 is a detail view of a rotor in FIG. 8;
FIG. 10 is a detail view of the state when a multiple key has been inserted into the rotor in FIG. 8;
FIG. 11 is a plan view of the operation of a lock device;
FIG. 12 is a plan view of the operation of a lock device;
FIG. 13 is a plan view of the operation of a lock device;
FIG. 14 is a plan view of the operation of a lock device;
FIG. 15 is a plan view of the operation of a lock device;
FIG. 16 is an oblique view of a lock device pertaining to Embodiment 2 in which part it has been omitted;
FIG. 17 is a detail cross section of a rotor;
FIG. 18 is a detail view of the state when a multiple key has been inserted into the rotor in FIG. 17;
FIG. 19 is a front cross section of a multiple key of the lock device pertaining to Embodiment 3;
FIG. 20 is a detail cross section of the rotor in a lock device of a lock system pertaining to Embodiment 3;
FIG. 21 is a detail view of the state when a multiple key has been inserted into the rotor in FIG. 20;
FIG. 22 is a side view of a multiple key in a lock system pertaining to Embodiment 4;
FIG. 23 is a plan view of part of the lock system pertaining to Embodiment 5;
FIG. 24 is a plan view of part of the lock system pertaining to Embodiment 5;
FIG. 25 is a detail front cross section of the rotor of a lock device in the lock system pertaining to Embodiment 6;
FIG. 26 is a detail view of the state when a multiple key has been inserted into the rotor in FIG. 25;
FIG. 27 is a plan view of a lock device in the lock system pertaining to Embodiment 7;
FIG. 28 is a plan view of a lock device in the lock system pertaining to Embodiment 7;
FIG. 29 is a plan view of a lock device in the lock system pertaining to Embodiment 7;
FIG. 30 is a side view of a multiple key pertaining to a modification example; and
FIG. 31 is a side view of a multiple key pertaining to another modification example.

### DESCRIPTION OF THE EMBODIMENTS

### Embodiment 1

The lock system and straddle-type vehicle pertaining to a preferred embodiment will now be described through reference to the drawings. In this embodiment, a motorcycle 10 will be described as an example of a straddle-type vehicle. Portions that are the same or equivalent in the drawings will be numbered the same and will not be described more than once. The dimensions of the constituent members in the drawings do not faithfully represent the dimensions of the actual constituent members, the dimensional proportions of the constituent members, etc.

### Overall Configuration

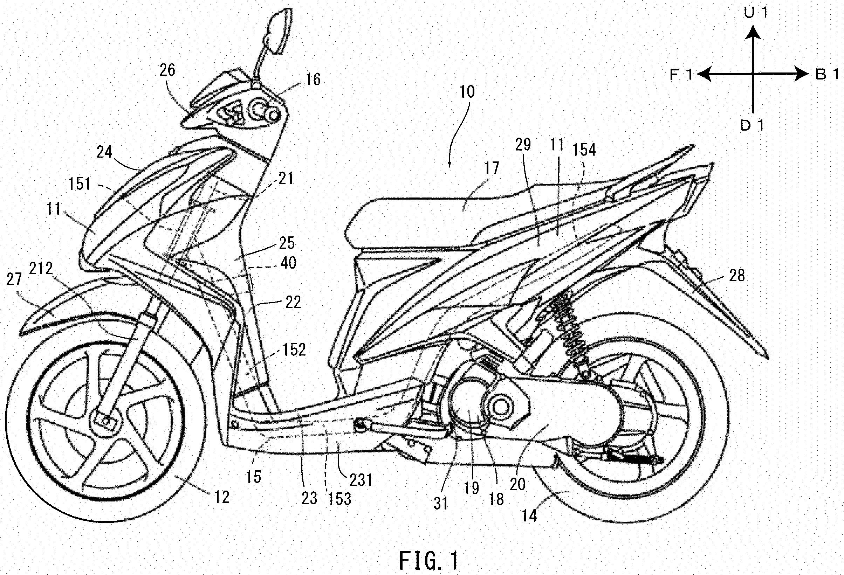

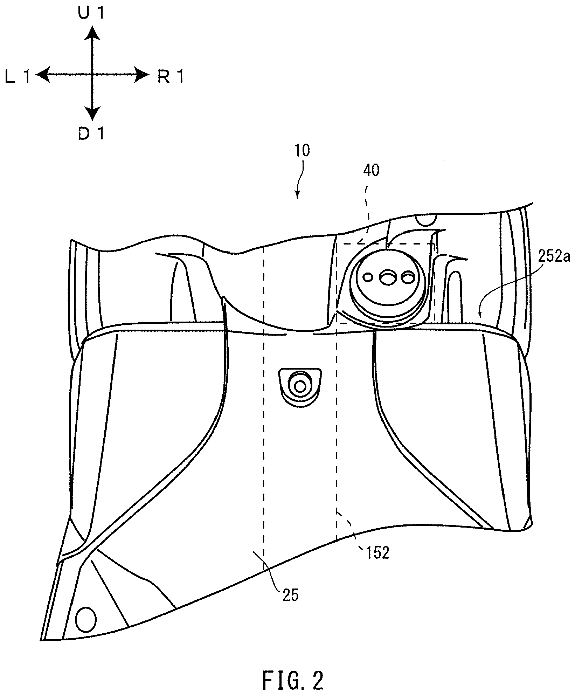

FIG. 1 is a left side view of the entire configuration of the motorcycle 10 pertaining to Embodiment 1. FIG. 2 is a rear view of a rear cover as seen by a rider sitting on a seat. In FIGS. 1 and 2, the "forward and backward" and "left and right" mean forward and backward and left and right as seen from a rider sitting on a seat 17 of the motorcycle 10. In FIGS. 1 and 2, an arrow F1 indicates the front direction of the motorcycle 10, and an arrow B1 indicates the back direction of the motorcycle 10. The arrow R1 indicates a right direction of the motorcycle 10, and an arrow L1 indicates a left direction of the motorcycle 10. An arrow U1 indicates an up direction of the motorcycle 10, and an arrow D1 indicates a down direction of the motorcycle 10.

As shown in FIG. 1, the motorcycle 10 comprises a front wheel 12, a rear wheel 14, a body frame 15, the seat 17, a power unit 18 and a body cover 22. The body frame 15 comprises a head pipe 151, a front frame 152, an under frame 153, and a rear frame 154. The head pipe 151 is disposed at the front part of the body frame 15. The front frame 152 is connected to the head pipe 151, and extends rearward and downward. The under frame 153 is connected to the lower part of the front frame 152, and extends rearward. The rear frame 154 is connected to the rear part of the under frame 153, and extends rearward and upward.

A steering shaft 21 is rotatably inserted in the head pipe 151. A handlebar 16 is attached to the upper end of the steering shaft 21. A front fork 212 is connected to the lower end of the steering shaft 21. The front wheel 12 is rotatably attached to the lower end of the front fork 212.

The power unit 18 is pivotably attached to the lower part of the rear frame 154. The power unit 18 comprises an engine 19 and a transmission case 20. The transmission case 20 houses a transmission.

The seat 17 is attached to the rear frame 154, above the power unit 18.

The body cover 22 covers the body frame 15. The body cover 22 comprises a footboard 23, a front cover 24, a leg shield 25, a handlebar cover 26, a front fender 27, a rear fender 28, and a side cover 29.

The front cover 24 is disposed ahead of the head pipe 151. A headlight 11 is disposed in the front cover 24. The leg shield 25 is disposed to the rear of the head pipe 151. The leg shield 25 extends in the up and down direction. The handlebar cover 26 is disposed above the front cover 24. The footboard 23 is provided ahead of and below the seat 17. An under cover 231 is disposed under the footboard 23. The front fender 27 is disposed above the front wheel 12. The rear fender 28 is disposed above the rear wheel 14. The side cover 29 is provided below the seat 17.

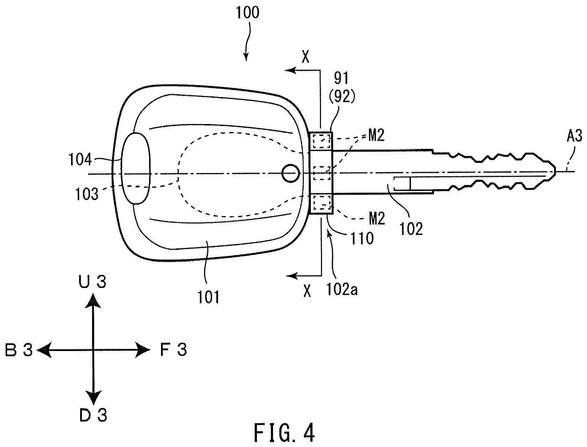

A lock device 40 is fixed to the front frame 152 of the body frame 15. The lock device 40 constitutes a lock system 30 along with a multiple key 100 (see FIG. 4). The lock device 40 protrudes rearward from the rear face of the leg shield 25.

FIG. 2 is a rear view of the leg shield 25 as seen by a rider sitting on the seat 17. As shown in FIG. 2, the lock device 40 is disposed to the right of center in the left and right direction of the motorcycle 10. The lock device 40 faces rearward so as to be easy to operate for the rider sitting on the seat 17.

### Lock System

The multiple key 100 and the lock device 40 constituting the lock system 30 pertaining to this embodiment will now be described. The lock device 40 is attached in any of various directions, depending on the model of straddle-type vehicle. Also, the multiple key 100 is used facing in any of various directions. Therefore, in the drawings discussed below, for the sake of convenience, the up direction of the lock device 40 is indicated by the arrow U2, the down direction of the lock device 40 by the arrow D2, the front direction of the lock device 40 by the arrow F2, the back direction of the lock device 40 by the arrow B2, the right direction of the lock device 40 by the arrow R2, and the left direction of the lock device 40 by the arrow L2. Similarly, the up direction of the multiple key 100 is indicated by the arrow U3, the down direction of the multiple key 100 by the arrow D3, the front direction of the multiple key 100 by the arrow F3, the back direction of the multiple key 100 by the arrow B3, the right direction of the lock device 40 by the arrow R3, and the left direction of the multiple key 100 by the arrow L3.

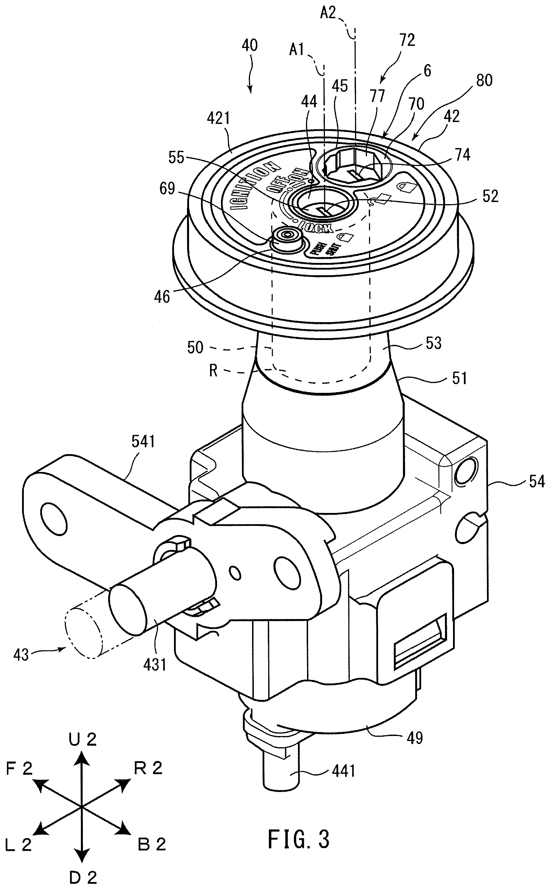

FIG. 3 is an oblique view of the lock device 40. The configuration of the lock device 40, which has a plurality of locks, will be described through reference to FIG. 3. The lock device 40 comprises a first cover 42, a second cover 53, a cylinder lock 50, a shutter mechanism 6, and a body 54. The first cover 42 and the second cover 53 constitute a casing of the present teaching. The lock device 40 in this embodiment comprises a cylinder lock 50 and a shutter lock 80 as the plurality of locks.

The first cover 42 is disposed at the upper part of the lock device 40. A first opening 44, a second opening 45, and a third opening 46 are formed in the upper face of the first cover 42.

The second cover 53 is disposed below the first cover 42. The shutter mechanism 6 is housed between the first cover 42 and the second cover 53. The shutter mechanism 6 will be described below.

The cylinder lock 50 functions as the main key to the motorcycle 10. The cylinder lock 50 is used to switch between a state in which a starting of the engine 19 is permitted and a state in which a starting of the engine 19 is prohibited. The cylinder lock 50 has a cylinder body 51 and a rotor R.

The cylinder body 51 extends downward with respect to the second cover 53. The rotor R is housed in the interior of the cylinder body 51. Then rotor R has a plurality of tumblers.

A first keyhole 52 is formed in an operation face 55, which is one end face of the cylinder lock 50. The operation face 55 faces upward. The first keyhole 52 extends downward from the operation face 55. A first axis A1 of the first keyhole 52 faces in the up and down direction. One end of the cylinder lock 50 is covered by the first cover 42 and the second cover 53. The first keyhole 52 of the cylinder lock 50 overlaps the first opening 44 as seen in a first axial direction of the first keyhole. The first keyhole 52 can be seen from the outside, through the first opening 44, when the shutter mechanism 6 is open.

The body 54 is disposed below the cylinder body 51. The body 54 houses a handlebar lock 43 and an ignition switch 49. A bracket 541 is formed on the body 54. The bracket 541 is used to fix the lock device 40 to the body frame 15. The handlebar lock 43 has a lock bar 431. The ignition switch 49 switches the engine 19 on and off.

FIG. 4 is a side view of the multiple key 100. As shown in FIG. 4, the multiple key 100 combines the functions of locking and unlocking the plurality of locks of the lock device 40. The multiple key 100 comprises a grip 101, a cylinder key 102, and a magnet key 110. The grip 101 is the portion that is gripped by a user. An attachment hole 104 is formed in the grip 101. The cylinder key 102 extends forward from the grip 101. A fixed component 103 formed at a rear end of the cylinder key 102 is embedded in an interior of the grip 101. The cylinder key 102 can be inserted into the first keyhole 52 of the cylinder lock 50.

The magnet key 110 is formed in front of the grip 101. The magnet key 110 has a base component 91 and second magnets M2. The base component 91 is located around an outside of the proximal end 102a of the cylinder key 102. The base component 91 surrounds a periphery of the cylinder key 102. The base component 91 is formed integrally with the grip 101. A rotational axis A3 of the base component 91 faces in the same direction as the rotational axis of the cylinder key 102. More precisely, the rotational axis A3 of the base component 91 is formed coaxially with the cylinder key 102.

The base component 91 has a convex component 92 that protrudes around the periphery of the rotational axis A3. The convex component 92 extends forward with respect to the grip 101. That is, the convex component 92 extends in the same direction as the cylinder key 102.

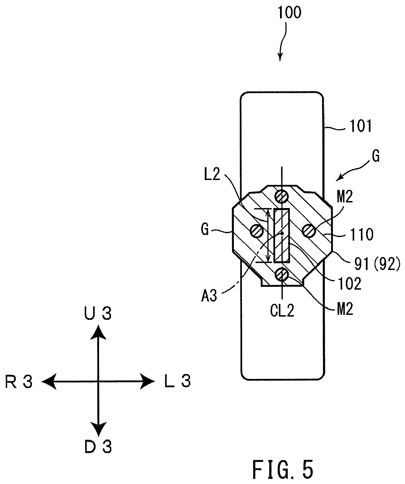

FIG. 5 is a front cross section cut along the X-X line in FIG. 4. The convex component 92 is formed in a polyhedral shape (shape G) as seen in the direction in which the rotational axis A3 extends. The shape G is in left and right symmetry to a center line CL2 that intersects the rotational axis A3 of the convex component 92. Also, the long side L2 in a front cross section of the cylinder key 102 is parallel to the center line CL2.

The second magnets M2 are embedded in the convex component 92. The second magnets M2 are embedded around the rotational axis A3 so that a space is left in between.

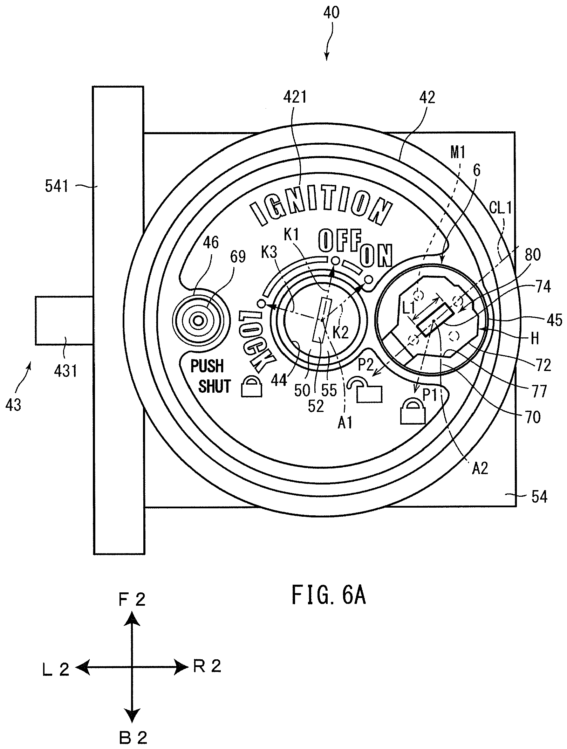

FIG. 6A is a plan view of the lock device 40. In FIG. 6A, the first keyhole 52 is facing in the direction of the arrow K1 (indicated by an imaginary line). When the cylinder key 102 is inserted into the first keyhole 52, the cylinder lock 50 can be locked or unlocked. The first keyhole 52 can face in either the direction of the arrow K2 or the direction of the arrow K3.

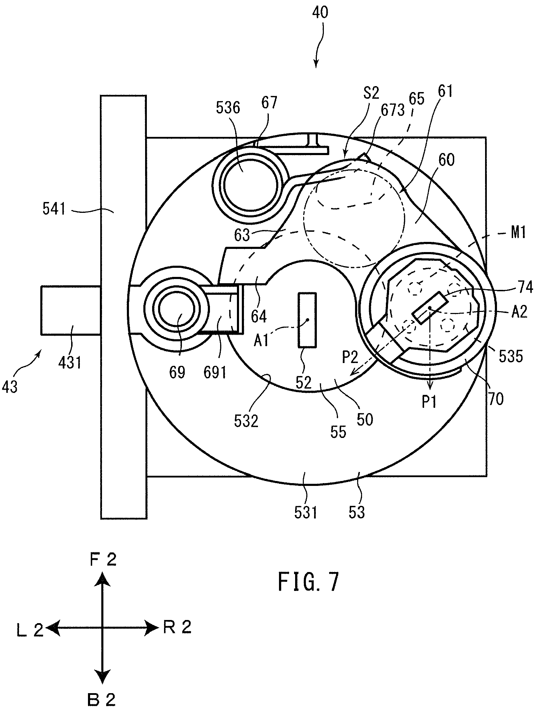

The shutter mechanism 6 comprises a shutter 60 (see FIG. 7) and a shutter lock 80. The shutter 60 corresponds to the first shutter of the present teaching.

The shutter lock 80 is able to operate the shutter 60. The shutter lock 80 has a rotor 70 and first magnets M1. A second keyhole 72 is formed in one end of the rotor 70. The rotor 70 extends in the up and down direction. One end of the rotor 70 is located an upper portion. The second keyhole 72 extends downward from the one end face of the rotor 70. The second keyhole 72 is formed around a second axis A2. The second axis A2 extends in the up and down direction. The rotor 70 is able to rotate around the second axis A2. The second keyhole 72 overlaps the second opening 45 viewed in the direction of the second axis A2 of the second keyhole 72. The second keyhole 72 can be seen from an outside through the second opening 45. The second keyhole 72 includes a concave component 77 and a cylinder key insertion hole 74.

The concave component 77 is a portion that is recessed downward from the one end face of the rotor 70. The concave component 77 has a polyhedral shape in plan view. We shall call the polyhedral shape of the concave component 77 in plan view a shape H. The shape H is symmetrical to the center line CL1 of the rotor 70. The concave component 77 of the rotor 70 has a shape that can engage with the convex component 92 of the magnet key 110. In other words, the convex component 92 is able to mate with the concave component 77. For example, the convex component 92 can be mated with the concave component 77 by having the shape H of the concave component 77 be similar to the shape G of the convex component 92, and making the shape G smaller than the shape H.

The cylinder key insertion hole 74 passes through downward from the bottom face of the concave component 77. The cylinder key insertion hole 74 has a shape that allows the insertion of the cylinder key 102. The portion of the cylinder key 102 that is inserted into the cylinder key insertion hole 74 is the portion from the front end of the cylinder key 102 up to the magnet key 110. In this embodiment, the shape of the cylinder key insertion hole 74 is rectangular in plan view. The cylinder key insertion hole 74 is formed so that its center in plan view coincides with the second axis A2. Also, the cylinder key insertion hole 74 is formed so that its long side L1 is parallel to the center line CL1. In a state in which the cylinder key 102 has been inserted into the cylinder key insertion hole 74, the convex component 92 of the magnet key 110 can be engaged with the concave component 77 of the rotor 70.

The rotor 70 is able to rotate in the circumferential direction of the second axis A2. More precisely, the rotor 70 can rotate around the second axis A2. The rotor 70 is able to rotate between the arrow P2 and the arrow P1 (indicated by imaginary lines). As shown in FIG. 6A, a state in which the concave component 77 and the cylinder key insertion hole 74 are facing in the direction of the arrow P2 shall be called a second state P2. A state in which the concave component 77 and the cylinder key insertion hole 74 are facing in the direction of the arrow P1 shall be called a first state P1.

The first magnets M1 are disposed at the lower part of the rotor 70. The first magnets M1 are disposed around the second axis A2 of the rotor 70 with a space left in between. The first magnets M1 are disposed at locations opposite the second magnets M2 embedded in the convex component 92, in a state in which the convex component 92 of the multiple key 100 is mated to the concave component 77.

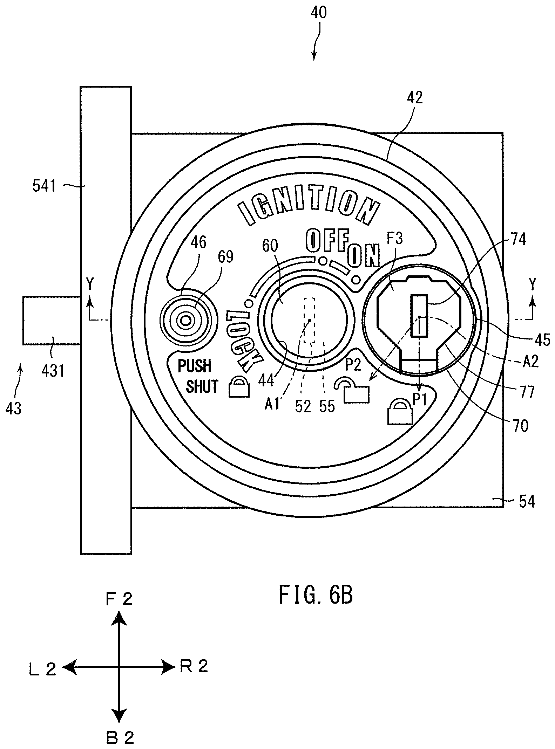

FIG. 6B is a plan view of the lock device 40. FIG. 6B shows the state when the shutter 60 has moved from the state in FIG. 6A, and the operation face 55 and the first keyhole 52 have been blocked off by the shutter 60.

FIG. 7 is a plan view of the lock device 40 when the first cover 42 has been removed. The second cover 53 can be seen in FIG. 7. A housing 531 is formed at the upper part of the second cover 53. The housing 531 has a fourth opening 532. The operation face 55 and the first keyhole 52 of the cylinder lock 50 are exposed upward through the fourth opening 532.

The shutter 60, the rotor 70, a protrusion 69, and a spring 67 are disposed in the housing 531.

The rotor 70 is supported by a boss 535. The boss 535 is formed in the housing 531. The rotor 70 is able to rotate around the boss 535.

The shutter 60 is connected to the rotor 70. In this embodiment, the shutter 60 is formed integrally with the rotor 70. The shutter 60 moves along with the rotation of the rotor 70. The shutter 60 has a blocker 61 for blocking off the first keyhole 52. The blocker 61 is the portion surrounded by the two-dot chain line (imaginary line).

In FIG. 7, the blocker 61 of the shutter 60 is not blocking the first keyhole 52 in plan view. A state in which the blocker 61 of the shutter 60 is not blocking the first keyhole 52 shall be understood to mean that the shutter 60 is in an open position S2. When the rotor 70 is in the second state P2, the shutter 60 is in the open position S2.

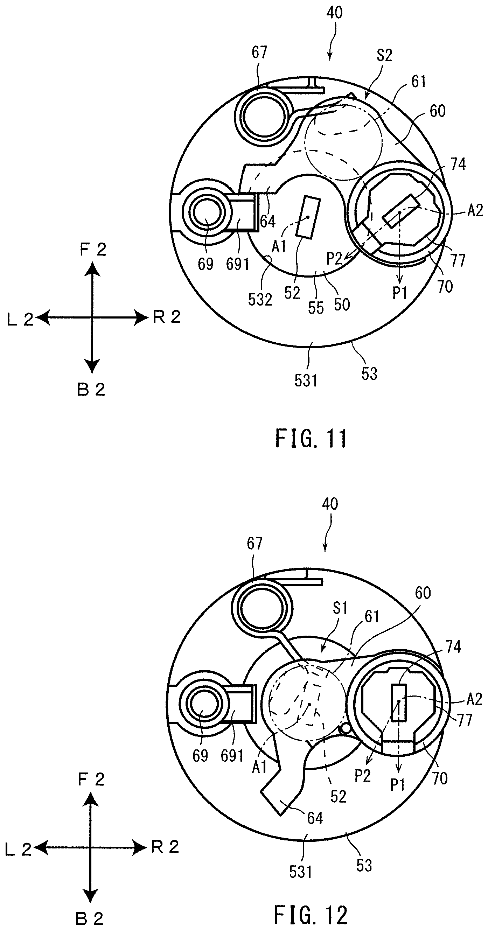

As the rotor 70 rotates from the second state P2 to the first state P1, the blocker 61 moves to a position at which it blocks off the first keyhole 52. A state in which the blocker 61 of the shutter 60 is blocking the first keyhole 52 shall be understood to mean that the shutter 60 is in a closed position S1 (see FIG. 12). As the rotor 70 rotates to the first state P1, the shutter 60 moves to the closed position S1.

The shutter 60 has a shutter arm 63 and a protrusion 65. A contact component 64 is formed on the shutter arm 63. The protrusion 65 is formed on the lower face of the shutter 60.

The spring 67 is fitted to a shaft 536 formed on the housing 531. A pressing component 673 of the spring 67 pushes the protrusion 65. That is, the shutter 60 and the rotor 70 are pushed by the spring 67 so as to rotate counter-clockwise in plan view.

The protrusion 69 has an arm 691. The arm 691 hits the contact component 64 of the shutter arm 63. When the shutter arm 63 makes contact, the arm 691 keeps the shutter 60 in the open position S2, and keeps the rotor 70 in the second state P2.

The protrusion 69 protrudes upward from a third opening 46 formed in the first cover 42, in a state in which the first cover 42 has been attached to the second cover 53. When the protrusion 69 is pushed downward, the arm 691 moves downward and separates from the shutter arm 63. Therefore, when the protrusion 69 is pushed downward, the shutter 60 moves from the open position S2 to the closed position S1 under the repulsive force of the spring 67. Also, the rotor 70 rotates from the second state P2 toward the first state P1. In this embodiment, the configuration is such that the protrusion 69 is pushed downward, but may instead be such that the protrusion 69 is slid forward and backward, or left and right.

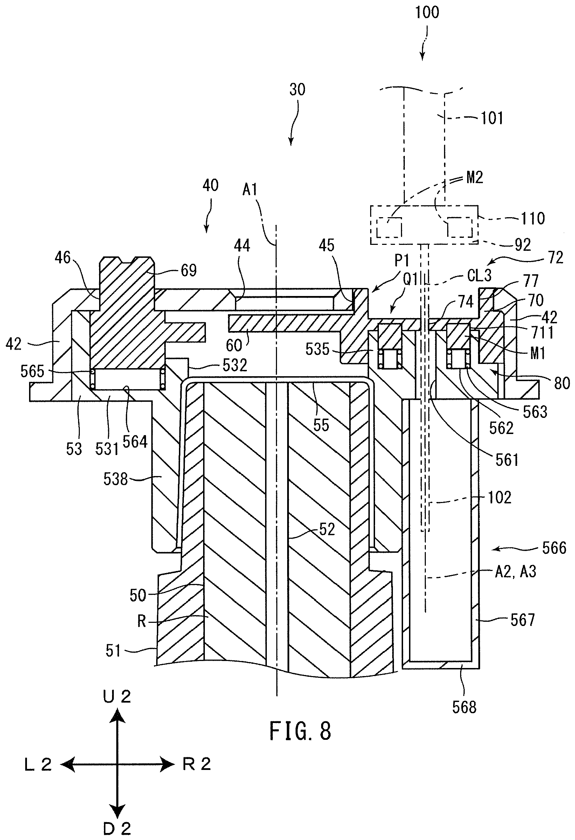

FIG. 8 is a front cross section cut along the Y-Y line in FIG. 6B. In FIG. 8, the rotor 70 is in the first state P1, and the shutter 60 is in the closed position S1.

The boss 535 is formed on the second cover 53. The center line CL3 of the boss 535 is the rotational center of the rotor 70. The center line CL3 extends in the up and down direction. A fifth opening 561 is formed in the center of the boss 535. The fifth opening 561 passes through from the upper face to the lower face of the boss 535. The cross sectional shape of the fifth opening 561 is circular. The fifth opening 561 is formed so as to be contiguous with the cylinder key insertion hole 74. The concave component 77 and the cylinder key insertion hole 74 extend parallel to the center line CL3 of the boss 535.

Therefore, in a state in which the cylinder key 102 has been inserted into the cylinder key insertion hole 74, and the convex component 92 of the multiple key 100 has been mated with the concave component 77, the cylinder key 102 passes through the fifth opening 561. The diameter of the fifth opening 561 is set so that the cylinder key 102 will not interfere with the inner wall of the fifth opening 561 when the multiple key 100 is used to rotate the rotor 70. The fifth opening 561 here is a through-hole, but need not be a through-hole. It may be any hole, as long as the cylinder key 102 can be inserted into the cylinder key insertion hole 74, and it is deep enough for the convex component 92 of the multiple key 100 to be mated with the concave component 77. Also, the cross sectional shape of the fifth opening 561 need not be circular, and may be any shape as long as there is no interference with the cylinder key 102.

First accommodation holes 562 are formed in the upper part of the boss 535. Second accommodation holes 711 are formed in the lower face of the rotor 70. The second accommodation holes 711 are formed at locations that are opposite the first accommodation holes 562 when the rotor 70 is in the first state P1.

The first magnets M1 are pushed upward by a spring 563. When the rotor 70 is in the first state P1, the first magnets M1 are fitted into both the first accommodation holes 562 and the second accommodation holes 711. Therefore, the first magnets M1 restrict the rotation of the rotor 70 from the first state P1 to the second state P2. The position at which the first magnets M1 restrict the rotation of the rotor 70 shall be termed the restricted position Q1.

Meanwhile, when the upper part of the first magnets M1 retracts from the second accommodation holes 711, the rotor 70 is permitted to rotate from the first state P1 to the second state P2. The position at which the first magnets M1 permit the rotation of the rotor 70 shall be termed the permitted position Q2.

In this embodiment, a container 566 is provided to the second cover 53. The container 566 is provided below the fifth opening 561. The container 566 holds dust or other foreign matter that may find its way in through the cylinder key insertion hole 74. The container 566 has a side wall 567 and a bottom 568. The upper part of the side wall 567 surrounds the lower part of the fifth opening 561. The side wall 567 extends downward. The lower part of the side wall 567 is closed off by the bottom 568. The interior space of the container 566 constituted by the side wall 567 and the bottom 568 is such that the length in the up and down direction is greater than that of the cylinder key 102 inserted into the cylinder key insertion hole 74. Also, the interior space of the container 566 is wider than the movable range of the cylinder key 102 inserted into the cylinder key insertion hole 74. Therefore, the side wall 567 and the bottom 568 of the container 566 do not interfere with the cylinder key 102 inserted into the cylinder key insertion hole 74. The container 566 does not necessarily have to be provided.

An attachment hole 564 is formed in the housing 531. The lower part of the protrusion 69 fits into the attachment hole 564. The protrusion 69 is pushed upward by a spring 565. The protrusion 69 can also be pushed downward.

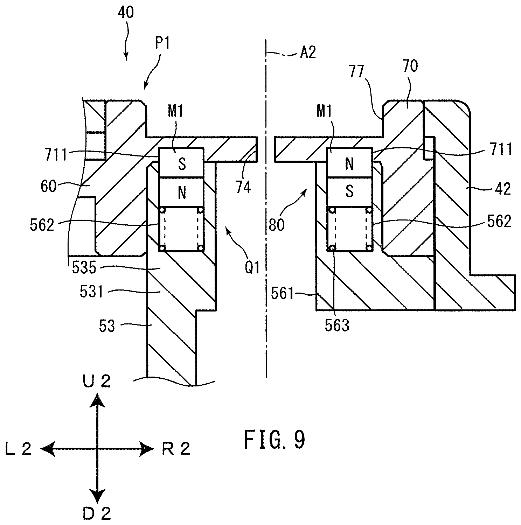

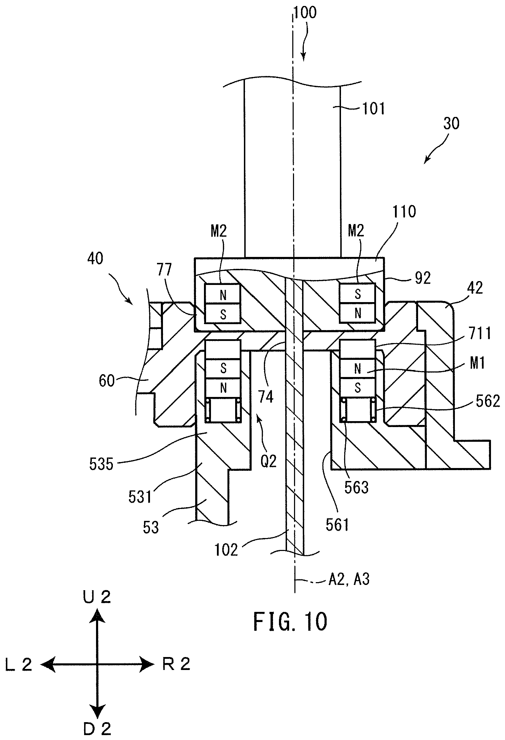

FIG. 9 is a detail view of the rotor 70 in FIG. 8. FIG. 10 is a detail view of the state when the multiple key 100 has been inserted into the rotor 70 in FIG. 8.

In FIG. 9, the rotor 70 is in the first state P1, and the first magnets M1 are in the restricted position Q1 at which they restrict the rotation of the rotor 70. Each of the first magnets M1 has one pole (either the S or N pole) facing upward, and the other pole facing downward. The combination of pole orientations is unique to the shutter lock 80.

In FIG. 10, the cylinder key 102 has been inserted into the cylinder key insertion hole 74, and the convex component 92 is engaged with the concave component 77. The second magnets M2 are each disposed so that the pole facing downward is the same as the pole above the first magnet M1. Each first magnets M1 is pushed downward by the second magnets M2. That is, the magnet key 110 uses the magnetic force of the second magnets M2 to switch the position of the first magnets M1 of the shutter lock 80 from the restricted position Q1 (see FIG. 9) to the permitted position Q2. When the first magnets M1 switch to the permitted position Q2, the rotor 70 can be rotated by the multiple key 100.

### Operation

FIGS. 11 to 15 are plan views of the operation of the lock device 40. In FIGS. 11 to 15, the first cover 42 has been removed from the lock device 40 for convenience in explaining, revealing the second cover 53 disposed at the upper part of the lock device 40. The body 54 disposed below the second cover 53 is not depicted in these drawings.

First, let us describe what happens in a change from a state in which the first keyhole 52 is not covered by the shutter 60 to a state in which the first keyhole 52 is covered by the shutter 60.

In FIG. 11, the rotor 70 is in the second state P2, and the shutter 60 is in the open position S2. When the protrusion 69 is pushed in the state in FIG. 11, the force of the spring 67 causes the shutter 60 to move from the open position S2 to the closed position S1, as shown in FIG. 12. Also, the rotor 70 moves from the second state P2 to the first state P1.

Next, let us describe what happens when the multiple key 100 is used to turn the rotor 70 and there is a change to a state in which the first keyhole 52 is not covered by the shutter 60.

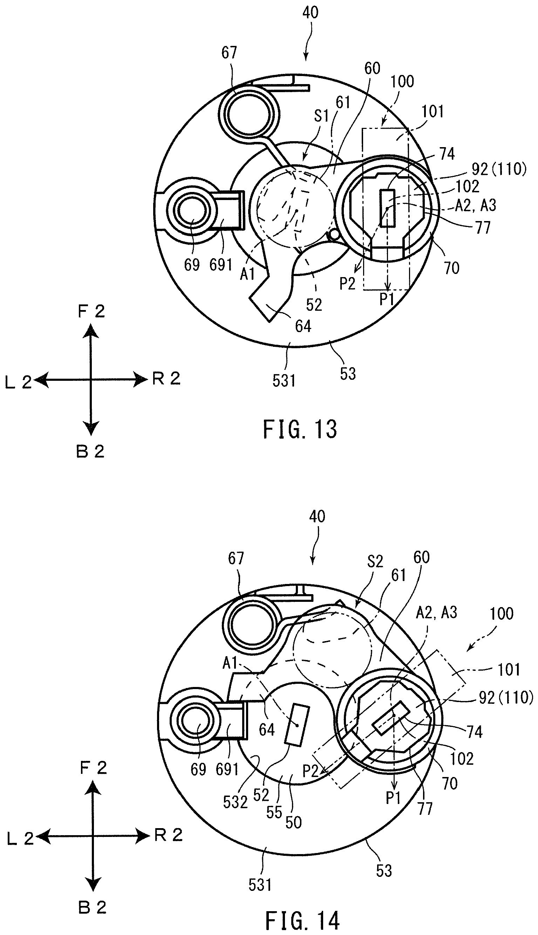

As shown in FIG. 13, the cylinder key 102 is inserted into the cylinder key insertion hole 74, and the convex component 92 of the multiple key 100 is engaged with the concave component 77. At this point, the cylinder key insertion hole 74 helps determine the orientation of the multiple key 100. More specifically, displacement of the multiple key 100 in the rotational direction, the up and down direction, and the left and right direction is suppressed. Accordingly, the operation to push in the cylinder key 102 is more stable. Also, the convex component 92 and the concave component 77 stabilize the engaged state of the rotor 70 and the magnet key 110. The magnet key 110 of the multiple key 100 switches the first magnets M1 from the restricted position Q1 to the permitted position Q2. When the first magnets M1 switch to the permitted position Q2, the rotor 70 can be rotated.

As shown in FIG. 14, the multiple key 100 is rotated clockwise around the second axis A2 while the cylinder key 102 is still inserted into the cylinder key insertion hole 74 and the convex component 92 is engaged with the concave component 77. Turning the multiple key 100 also turns the magnet key 110. The shutter 60 moves from the closed position S1 to the open position S2, the shutter arm 63 pushing the arm 691 of the protrusion 69 downward. The arm 691 being pushed downward by the shutter arm 63, the shutter 60 can move to the open position S2. The shutter 60 moves from the closed position S1 to the open position S2 along with the rotation of the rotor 70. Also, the rotor 70 goes from the first state P1 to the second state P2. After the shutter arm 63 moves to the open position S2 where the shutter arm 63 does not overlap with the arm 691 in plan view as shown in FIG. 14, the arm 691 which has pushed downward by the shutter arm 63 moves upward by an elastic force of the spring 565, resulting in overlapping of the arm 691 and the shutter arm 63 in vertical direction. That is, the arm 691 hits the contact component 64 of the shutter arm 63. Therefore, the arm 691 keeps the shutter 60 in the open position S2. In this state, even if the multiple key 100 is pulled out of the cylinder key insertion hole 74 and the concave component 77, the shutter 60 will be maintained in the open position S2.

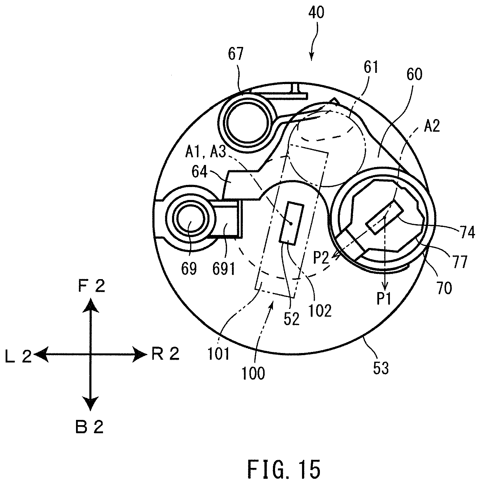

Using the multiple key 100 to unlock the cylinder lock 50 will now be described. After the multiple key 100 is pulled out of the cylinder key insertion hole 74 and the concave component 77 being in a state shown in FIG. 14, the cylinder key 102 is inserted into the first keyhole 52 as shown in FIG. 15, without switching the holding position of the multiple key 100 from the holding position when the user pulled the multiple key 100. When the cylinder key 102 is inserted into the first keyhole 52, the cylinder lock 50 can be unlocked.

### Effect of Embodiment 1

With the lock system 30 in this embodiment, the convex component 92 of the multiple key 100 is engaged with the concave component 77 of the rotor 70 in a state in which the cylinder key 102 has been inserted into the cylinder key insertion hole 74 of the rotor 70, and the multiple key 100 is turned to move the shutter 60 and open the first keyhole 52 of the cylinder lock 50. Also, the cylinder lock 50 can be locked and unlocked by pulling the multiple key 100 out of the cylinder key insertion hole 74 and the concave component 77 and inserting the cylinder key 102 into the first keyhole 52 of the cylinder lock 50. The user can operate the rotor 70 and the cylinder lock 50 while still holding the multiple key 100 in the orientation of inserting the cylinder key 102. Therefore, the lock device 40 can be operated without switching the holding position of the multiple key 100, and the operation of the lock device 40 with the multiple key 100 can be performed smoothly.

Since the orientation of the multiple key 100 is determined by the cylinder key insertion hole 74, the insertion of the cylinder key 102 is more stable. In other words, the first magnets M1 of the magnet key 110 are guided to the second magnets M2 of the rotor 70. This allows the operation of the lock device 40 by the multiple key 100 to be performed smoothly. In this embodiment, since the convex component 92 of the multiple key 100 is engaged with the concave component 77 of the rotor 70, the rotor 70 can be turned even if the cylinder key 102 is not engaged with the cylinder key insertion hole 74. However, if the rotor is constituted by the concave component 77 alone, the depth of the concave component 77 and the height of the convex component 92 will have to be increased in order to make the rotor easy to turn while the concave component 77 and the convex component 92 are still mated. Engaging the cylinder key 102 with the cylinder key insertion hole 74 in addition to engaging the concave component 77 and the convex component 92 as in the configuration of the present teaching allows the rotor 70 to be easily turned without having to make the rotor 70 or the magnet key 110 larger. Therefore, the rotor 70 and the magnet key 110 can be kept to a compact size while the rotor 70 is easy to turn.

The rotor 70 and the magnet key 110 are securely fitted together by the convex component 92 of the magnet key 110 and the concave component 77 of the rotor 70. Accordingly, the rotor 70 and the magnet key 110 are stably engaged, and the rotor 70 can be operated more reliably.

The second axis of the concave component 77 of the rotor 70 extends in the same direction as the first axis of the first keyhole 52 of the cylinder lock 50. The direction in which the convex component 92 of the magnet key 110 is engaged with the concave component 77 of the rotor 70 is the same as the direction in which the cylinder key 102 is inserted into the first keyhole 52 of the cylinder lock 50. The user can operate the rotor 70 and the cylinder lock 50 in a state in which the cylinder key 102 is facing in the same direction. Therefore, the user can be operate the lock device 40 with the cylinder key 102 facing in the same direction, without having to change the holding position of the multiple key 100.

The magnet key 110 is provided to the proximal end 102a of the cylinder key 102. The cylinder key 102 and the cylinder key insertion hole 74 serve as guides in engaging the magnet key 110 with the concave component 77 of the rotor 70. Therefore, the magnet key 110 and the concave component 77 of the rotor 70 can be easily engaged. Also, since the concave component 77 of the rotor 70 and the magnet key 110 are reliably fitted together by being guided by the cylinder key 102 and the cylinder key insertion hole 74, the concave component 77 of the rotor 70 and the magnet key 110 are engaged more stably, and the rotor 70 can be operated more reliably.

Since the magnet key 110 is provided integrally with the grip 101, the rotational force exerted by a user on the grip 101 can be transmitted directly to the magnet key 110. Also, the multiple key 100 can be manufactured more easily when than the magnet key 110 is formed as a separate part from the grip 101.

Since the magnet key 110 is provided coaxially with the cylinder key 102, the rotation of the cylinder key 102 can be performed on the same rotational axis as the rotation of the magnet key 110. This allows the lock device 40 to be operated more smoothly by the multiple key 100.

The direction in which the poles of the second magnets M2 of the magnet key 110 extend is the same as the direction in which the cylinder key extends. The first magnets M1 of the shutter lock 80 are disposed on the rotor 70 so as to correspond to the second magnets M2. Therefore, the first magnets M1 and the second magnets M2 are disposed facing in the same direction as the direction in which the convex component 92 of the magnet key 110 is engaged with the concave component 77 of the rotor 70, which makes the disposition of the first magnets M1 and the second magnets M2 easier.

The second cover 53 comprises the bottomed container 566 that extends in the insertion direction from around the cylinder key insertion hole 74. Therefore, if any dust or other such foreign matter should find its way in through the cylinder key insertion hole 74, it will be held in the container 566.

### Embodiment 2

The lock system 130 in Embodiment 2 differs from the lock system 30 in Embodiment 1 in that no concave component is formed in a rotor 170, and only the cylinder key insertion hole 74 is provided. The cylinder key insertion hole 74 corresponds to the second keyhole of the present teaching. In the following description, components that are the same as in Embodiment 1 will be numbered the same and will not be described again, and only those components that are different from Embodiment 1 will be described.

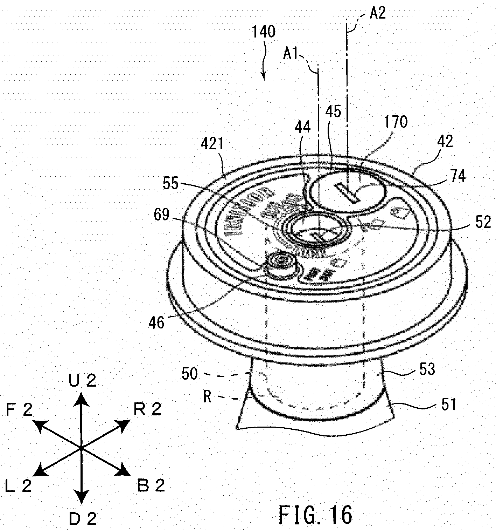

FIG. 16 is an oblique view in which part of the lock device 140 pertaining to Embodiment 2 has been omitted. As shown in FIG. 16, the cylinder key insertion hole 74 has a shape that allows the cylinder key 102 of the multiple key 100 to be inserted. More specifically, for example, the cross sectional shape of the cylinder key 102 is similar to the shape of the cylinder key insertion hole 74, and the cylinder key insertion hole 74 is made larger than the cylinder key 102 so that the cylinder key 102 can be inserted into the cylinder key insertion hole 74. If the cross sectional shape of the cylinder key 102 is rectangular (see FIG. 5), for instance, the shape of the cylinder key insertion hole 74 is a rectangle that is similar to the rectangle of the cross sectional shape of the cylinder key 102.

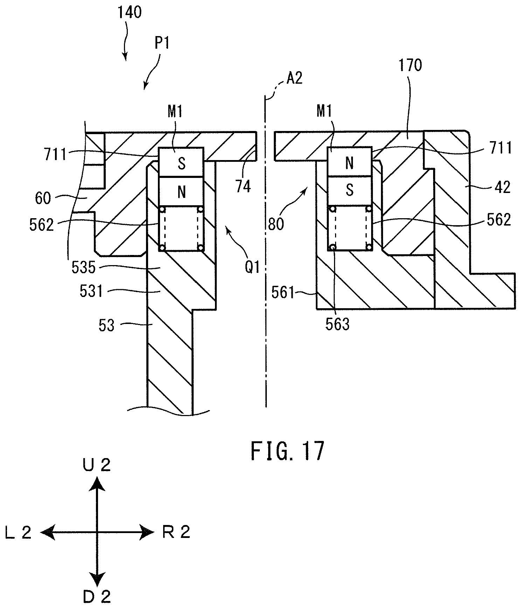

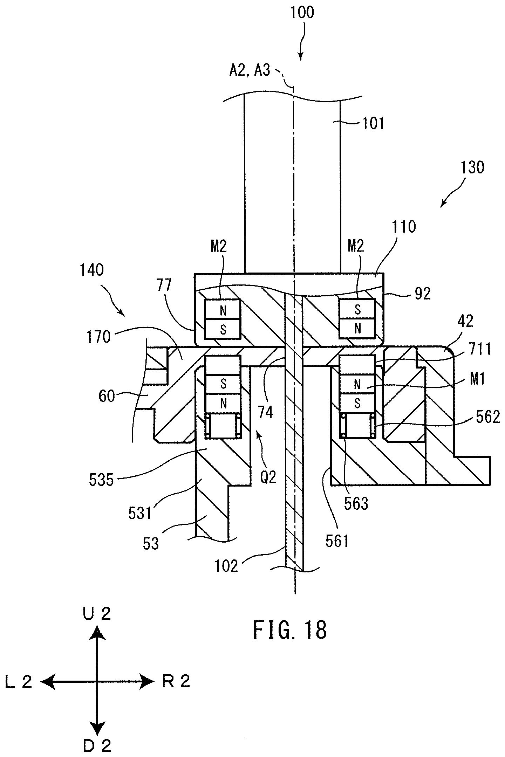

FIG. 17 is a detail cross section of the rotor 170. FIG. 18 is a detail view of the state when the multiple key 100 has been inserted into the rotor 170 in FIG. 17.

In FIG. 17, the first magnets M1 are in the restricted position Q1 at which the rotation of the rotor 170 is restricted.

In FIG. 18, the cylinder key 102 of the multiple key 100 is inserted into the cylinder key insertion hole 74 of the rotor 170. As shown in FIG. 18, when the cylinder key 102 is inserted into the cylinder key insertion hole 74, the magnet key 110 switches the first magnets M1 of the shutter lock 80 from the restricted position Q1 to the permitted position Q2.

When the multiple key 100 is turned in a state in which the cylinder key 102 has been inserted into the cylinder key insertion hole 74, part of the cylinder key 102 touches part of the peripheral wall of the cylinder key insertion hole 74, and the rotor 170 can be turned.

### Effect of Embodiment 2

With the lock system 130 in this embodiment, in a state in which the cylinder key 102 has been inserted into the cylinder key insertion hole 74, and the cylinder key insertion hole 74 has been engaged with the cylinder key 102, the magnet key 110 is turned to move the shutter 60 and open the first keyhole 52 of the cylinder lock 50. Also, the cylinder lock 50 can be locked and unlocked by pulling the cylinder key 102 out of the cylinder key insertion hole 74 and inserting the cylinder key 102 into the first keyhole 52 of the cylinder lock 50. The user can operate the rotor 170 and the cylinder lock 50 while still gripping the multiple key 100 in the orientation of inserting the cylinder key 102. Therefore, the user can operate the lock device 140 without changing the holding position of the multiple key 100, and the lock device 140 can be smoothly operated with the multiple key 100.

When the cylinder key 102 inserted into the cylinder key insertion hole 74 is turned, the cylinder key 102 touches the peripheral wall of the cylinder key insertion hole 74, and the rotor 170 can be rotated from the first state to the second state. Therefore, not only can the first magnets M1 be guided to the second magnets M2, but the concave component of the rotor 170 can be eliminated. Therefore, a simpler shape can be employed for the rotor 170. Also, the extra space freed up by eliminating the concave component affords greater latitude in the layout of the lock device 140. In this embodiment, the convex component 92 may have any shape as long as it is a shape that allows the first magnets M1 to be accommodated.

### Embodiment 3

The lock system 230 in Embodiment 3 differs from the lock system 30 in Embodiment 1 in the disposition of the first magnets M1 and the second magnets M2. In the following description, components that are the same as in Embodiment 1 will be numbered the same and will not be described again, and only those components that are different from Embodiment 1 will be described.

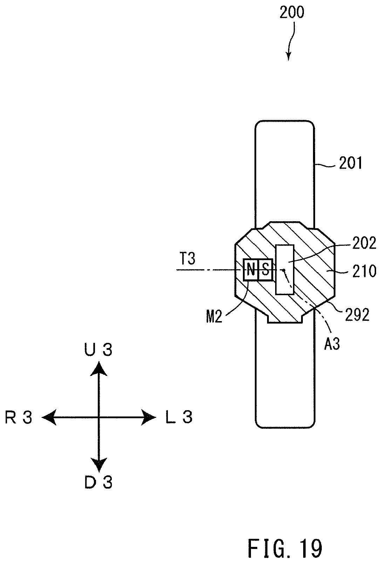

FIG. 19 is a front cross section of a multiple key 200 of the lock device 240 pertaining to Embodiment 3. As shown in FIG. 19, the second magnets M2 are disposed on a convex component 292. The second magnets M2 are disposed so that the poles (the S pole and the N pole) face in a direction that intersects the direction in which a cylinder key 202 extends.

More specifically, the direction in which the poles (the S pole and the N pole) of the second magnets M2 extend shall be termed a third direction T3. The second magnets M2 are disposed so that the third direction T3 intersects the direction in which the cylinder key 202 extends (the forward and backward direction).

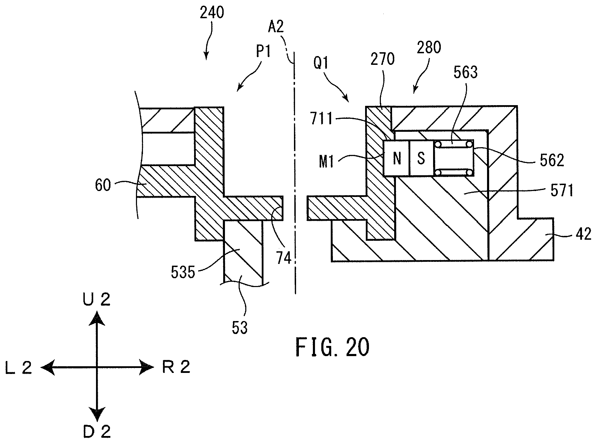

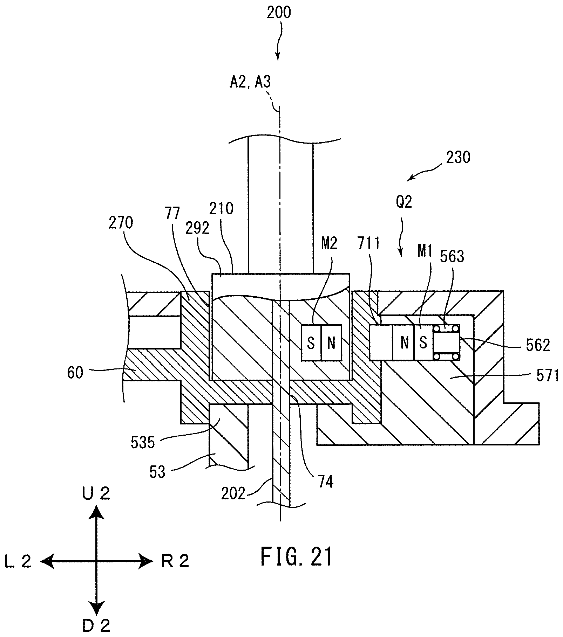

FIG. 20 is a detail front cross section of the rotor 270 in a lock device 240 of the lock system 230 pertaining to Embodiment 3. FIG. 21 is a detail view of the state when the multiple key 200 has been inserted into the rotor 270 in FIG. 20.

As shown in FIG. 20, a convex component 571 is formed on the second cover 53. First accommodation holes 562 are formed in the convex component 571. Second accommodation holes 711 are formed in the side face of the rotor 270. The second accommodation holes 711 are formed at locations that correspond to the first accommodation holes 562 of the convex component 571 when the rotor 270 is in the first state P1.

The first magnets M1 are accommodated in the first accommodation holes 562 and the second accommodation holes 711. The first magnets M1 are pushed to the left in the drawing by a spring 563. The first magnets M1 are fitted into both the first accommodation holes 562 and the second accommodation holes 711.

In FIG. 21, the cylinder key 202 is inserted into the cylinder key insertion hole 74, and the convex component 292 of the multiple key 200 is engaged with the concave component 77 of the rotor 270.

When the convex component 292 of the multiple key 200 is engaged with the concave component 77 of the rotor 270, the second magnets M2 push the first magnets M1 to the right in the drawing. That is, the position of the first magnets M1 is switched from the restricted position Q1 to the permitted position Q2. Once the position of the first magnets M1 have been switched to the permitted position Q2, the rotor 270 can be operated with the multiple key 200.

### Effect of Embodiment 3

With the lock system 230 in this embodiment, the second magnets M2 of a magnet key 210 are disposed facing in a direction that intersects the direction in which the cylinder key 202 of the magnet key 210 extends. The first magnets M1 of a shutter lock 280 are disposed around the rotor 270 so as to correspond to the second magnets M2. Therefore, even if the rotor 270 is made smaller, there will be enough space to dispose the second magnets M2, and this affords a more compact lock device 240.

### Embodiment 4

With the lock system 330 in Embodiment 4, a grip 301 of a multiple key 300 has an attachment hole 304. In this embodiment, the attachment hole 304 is formed at a different position than in the lock system 30 in Embodiment 1. In the following description, components that are the same as in Embodiment 1 will be numbered the same and will not be described again, and only those components that are different from Embodiment 1 will be described.

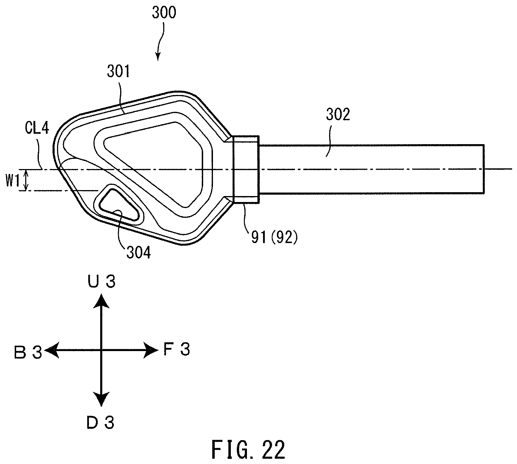

FIG. 22 is a side view of the multiple key 300 in the lock system 330 pertaining to Embodiment 4. As shown in FIG. 22, the grip 301 of the multiple key 300 has the attachment hole 304. If we let CL4 be the center line of a cylinder key 302, the center line CL4 and the attachment hole 304 are separated by a distance W1 in the up and down direction. That is, the grip 301 of the multiple key 300 is vertically asymmetrical with respect to the center line CL4. Since the grip 301 has an asymmetrical shape, the user can ascertain the orientation of the grip 301 by touching the grip 301. Therefore, the user can easily ascertain the orientation of the multiple key 300, that is, can distinguish an orientation in which the cylinder key 302 can be inserted into the rotor 70 from an orientation in which the cylinder key 302 cannot be inserted into the rotor 70.

Also, a key chain or other such article can be attached to the attachment hole 304 at the user's discretion. Attaching a key chain or other such article makes it easier for the user to distinguish the orientation of the multiple key 300.

### Effect of Embodiment 4

With the lock system 330 in this embodiment, the grip 301 of the multiple key 300 has the attachment hole 304 at a position that is offset with respect to the center line CL4 of the cylinder key 302. Therefore, the user can easily distinguish the orientation of the multiple key 300. The orientation of the multiple key 300 is either an orientation in which the cylinder key 302 can be inserted into the cylinder key insertion hole 74 or the concave component 77, or an orientation in which the cylinder key 302 cannot be inserted into the cylinder key insertion hole 74 or the concave component 77. Therefore, the user is unlikely to mistake the orientation of the multiple key 300 when inserting the cylinder key 302 into the concave component 77 and the cylinder key insertion hole 74, and the lock device 340 can be operated with the multiple key 300 more smoothly. Also, attaching an article to the attachment hole 304 makes it easier to identify the orientation of the multiple key 300.

### Embodiment 5

With the lock system 430 in Embodiment 5, the disposition of the first magnets M1 and the second magnets M2 is different from that in the lock system 30 in Embodiment 1. In the following description, components that are the same as in Embodiment 1 will be numbered the same and will not be described again, and only those components that are different from Embodiment 1 will be described.

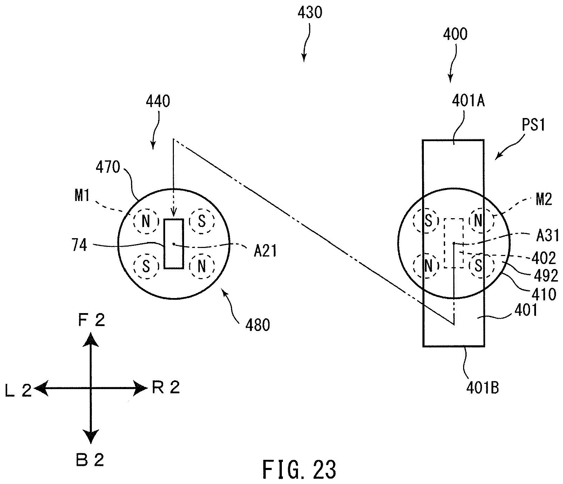

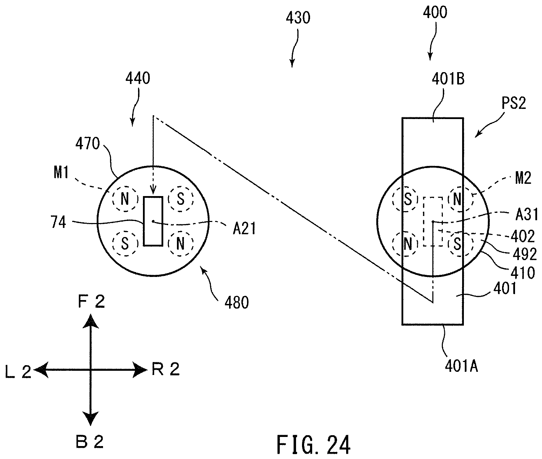

FIGS. 23 and 24 are plan views of part of the lock system 430 pertaining to Embodiment 5. FIG. 23 shows a rotor 470 and a multiple key 400. The multiple key 400 is such that an end 401A of a grip 401 faces forward, and an end 401 B faces rearward. FIG. 23 shows the state before a cylinder key 402 and a convex component 492 of the multiple key 400 are inserted into the rotor 470. The convex component 492 and the cylinder key 402 can be inserted in this orientation into the rotor 470. We shall call an orientation in which the end 401A of the grip 401 is facing forward and the end 401 B is facing rearward a first orientation PS1.

Four first magnets M1 are disposed on the rotor 470. The four first magnets M1 are disposed around the center A21 of the rotor 470 with a space in between. Of the four first magnets M1, the first magnets M1 disposed at the left front and right rear have the N pole facing upward. The first magnets M1 disposed at the left rear and the right front have the S pole facing upward.

Four second magnets M2 are also disposed on a magnet key 410 of the multiple key 400. The four second magnets M2 are disposed around the rotational axis A31 in a plan view of the convex component 492 with a space in between. The rotational axis A31 coincides with the center of the cylinder key 402 in plan view. Of the four second magnets M2, the second magnets M2 disposed at the left front and right rear have the S pole facing upward and the N pole facing downward. The second magnets M2 disposed at the left rear and the right front have the N pole facing upward and the S pole facing downward. Therefore, in the first orientation PS1, inserting the multiple key 400 into the rotor 470 switches the position of the first magnets M1 from the restricted position Q1 to the permitted position Q2.

In FIG. 24, the multiple key 400 is such that the end 401A of the grip 401 is facing rearward and the end 401 B is facing forward. We will call an orientation in which the end 401A of the grip 401 is facing rearward and the end 401 B is facing forward a second orientation PS2.

The second orientation PS2 is an orientation in which the multiple key 400 has been rotated 180 degrees with respect to the first orientation PS1. That is, the second orientation PS2 results when the multiple key 400 is rotated 180 degrees around the rotational axis A31 of the cylinder key 402 from the first orientation PS1.

The disposition of the four second magnets M2 is the same in the second orientation PS2 as in the first orientation PS1. This is because the disposition of the poles (S and N poles) of the four second magnets M2 is in point symmetry with respect to the rotational axis A31 of the cylinder key 402.

Accordingly, when the multiple key 400 is inserted into the rotor 470 in the second orientation PS2, the position of the first magnets M1 of the shutter lock 480 is switched from the restricted position Q1 (see FIG. 9) to the permitted position Q2 (see FIG. 10).

### Effect of Embodiment 5

With the lock system 430 in this embodiment, the shutter 60 can be unlocked regardless of whether the cylinder key 402 has been inserted into the cylinder key insertion hole 74 of the rotor 470 in the first orientation PS1 or the second orientation PS2. This makes it easy to insert the cylinder key 402 into the cylinder key insertion hole 74, and allows the lock device 440 to be easily operated with the multiple key 400.

### Embodiment 6

The lock system 530 in Embodiment 6 differs from the lock system 30 in Embodiment 1 in that it has a protector 572. The protector 572 corresponds to the second shutter of the present teaching. In the following description, components that are the same as in Embodiment 1 will be numbered the same and will not be described again, and only those components that are different from Embodiment 1 will be described.

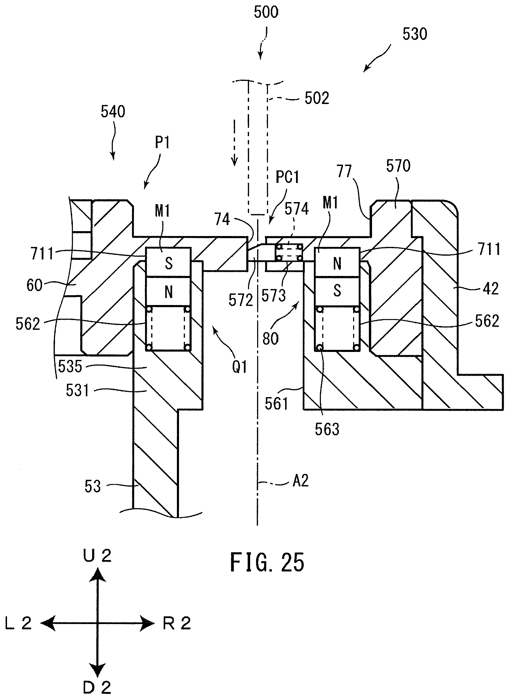

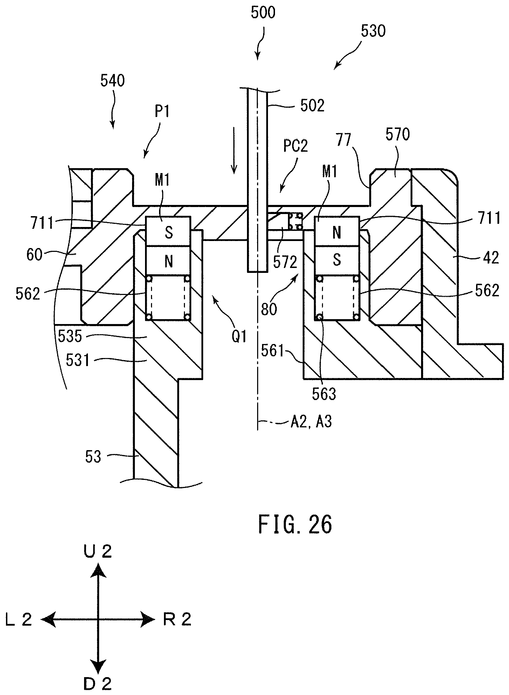

FIG. 25 is a detail front cross section of the rotor 570 of a lock device 540 in the lock system 530 pertaining to Embodiment 6. FIG. 26 is a detail view of the state when a multiple key 500 has been inserted into the rotor 570 in FIG. 25.

As shown in FIG. 25, the rotor 570 has a third accommodation hole 573. The opening of the third accommodation hole 573 is facing the cylinder key insertion hole 74. The protector 572 is disposed in the third accommodation hole 573. The protector 572 is pushed toward the cylinder key insertion hole 74 by a spring 574. The upper face of the protector 572 is tapered. A state in which the protector 572 is blocking off the cylinder key insertion hole 74 shall be termed the closed position PC1.

As shown in FIG. 26, when the distal end of the cylinder key 502 touches the protector 572, the protector 572 is pushed into the third accommodation hole 573 against the force of the spring 574. A state in which the protector 572 is pushed into the third accommodation hole 573 and the insertion of the cylinder key 502 is permitted shall be termed an open position PC2.

The protector 572 goes to the closed position PC1 in a state in which the cylinder key 502 has not been inserted into the cylinder key insertion hole 74. When the cylinder key 502 is inserted into the cylinder key insertion hole 74, the protector 572 goes to the open position PC2.

### Effect of Embodiment 6

With the lock system 530 in this embodiment, the rotor 570 has the protector 572 as a second shutter. The protector 572 blocks off the cylinder key insertion hole 74, and opens up the cylinder key insertion hole 74 when the cylinder key 502 is inserted into the cylinder key insertion hole 74. Accordingly, less dust and other such foreign matter will find its way in through the cylinder key insertion hole 74.

### Embodiment 7

The lock system 630 in Embodiment 7 differs from the lock system 30 in Embodiment 1 in that a shutter 660 and a rotor 670 of a lock device 640 are separate members rather than being integrated. In the following description, components that are the same as in Embodiment 1 will be numbered the same and will not be described again, and only those components that are different from Embodiment 1 will be described.

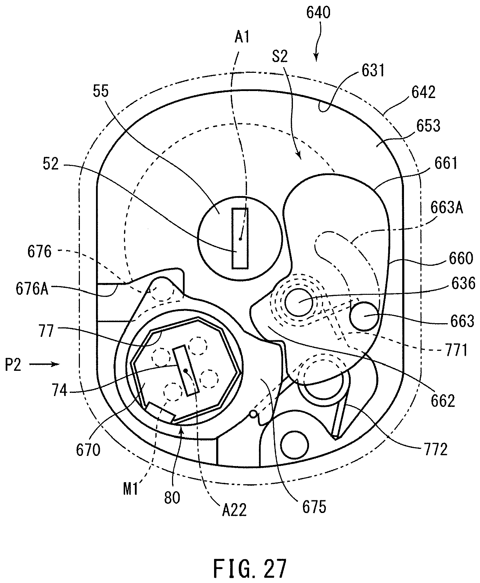

FIGS. 27, 28, and 29 are plan views of the lock device 640 in the lock system 530 pertaining to Embodiment 7. In FIGS. 27, 28, and 29, a first cover 642 has been removed so that a second cover 653 is visible. The first cover 642 is indicated by a two-dot chain line.

As shown in FIG. 27, a housing 631 is formed in the upper part of the second cover 653. The shutter 660 and the rotor 670 are disposed in the housing 631 of the second cover 653.

The shutter 660 is rotatably supported by a boss 636 formed on the housing 631. The shutter 660 has a blocker 661, a shutter cam 662, and a protrusion 663.

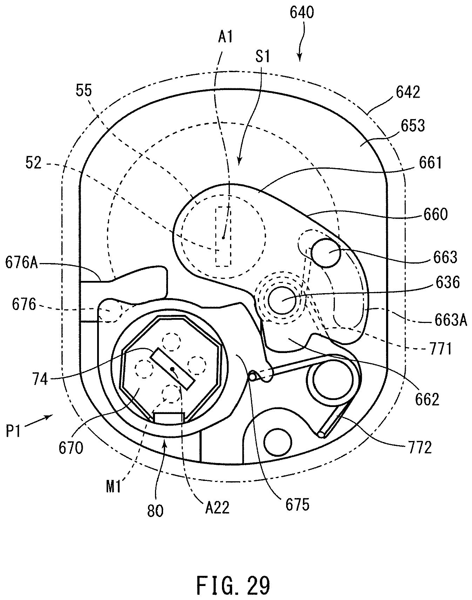

The blocker 661 is a portion that blocks off the first keyhole 52. In FIG. 27, the blocker 661 has opened up the first keyhole 52. A state in which the blocker 661 opens up the first keyhole 52 shall be termed the open position S2. A state in which the blocker 661 blocks off the first keyhole 52 shall be termed the closed position S1 (see FIG. 29). The shutter 660 is able to move between the closed position S1 and the open position S2.

The shutter cam 662 sticks out toward the rotor 670. The protrusion 663 is formed on the upper face of the shutter 660. The protrusion 663 protrudes upward from a guide hole 663A formed in the first cover 642. A spring 771 pushes the shutter 660 from the closed position S1 toward the open position S2 (clockwise). In FIG. 27, the shutter 660 can be moved from the open position S2 to the closed position S1 by operating the protrusion 663 counter-clockwise.

The rotor 670 is rotatably supported by a boss (not shown) formed on the housing 631. The rotor 670 is able to rotate around a rotational axis A22. An operation cam 675 is formed on the rotor 670. The operation cam 675 sticks out toward the shutter 660. The rotor 670 is pushed by a spring 772 so as to rotate counter-clockwise.

A protrusion 676 is formed on the lower face of the rotor 670. The protrusion 676 mates with a groove 676A formed in the second cover 653. The protrusion 676 and the groove 676A restrict the rotation of the rotor 670 to a specific range.

In FIG. 27, the rotor 670 is in the second state P2. When the rotor 670 is in the second state P2, the second magnets M2 of the shutter lock 80 are in the permitted position Q2. In the permitted position Q2, the rotor 670 is permitted to rotate from the second state P2 to the first state P1.

In FIG. 29, the rotor 670 is in the first state P1. When the rotor 670 is in the first state P1, the second magnets M2 of the shutter lock 80 are in the restricted position Q1. In the restricted position Q1, the rotor 670 is restricted from rotating from the first state P1 to the second state P2.

Next, the operation of the lock device 640 will be described. In the state in FIG. 27, the shutter 660 is in the open position S2, and the rotor 670 is in the second state P2. The second magnets M2 of the shutter lock 80 are in the permitted position Q2. In the permitted position Q2, the rotor 670 is permitted to rotate.

The front part of the operation cam 675 is in contact with the rear part of the shutter cam 662. The protrusion 663 is operated to rotate the shutter 660 counter-clockwise. The shutter cam 662 pushes down the operation cam 675 to rotate the rotor 670 clockwise.

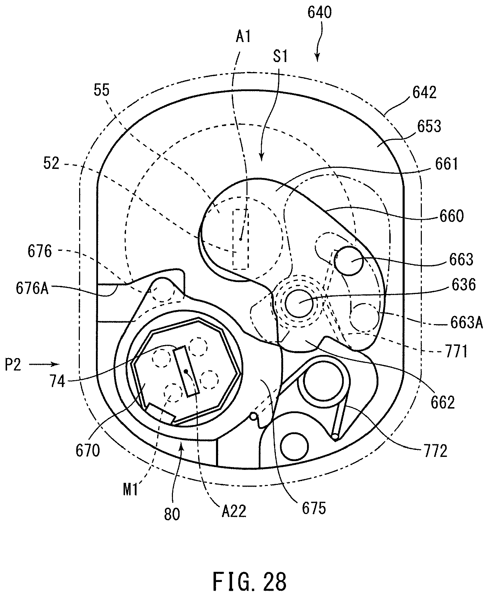

As shown in FIG. 28, when the shutter 660 reaches the closed position S1, contact between the shutter cam 662 and the operation cam 675 is temporarily released. When contact between the shutter cam 662 and the operation cam 675 is released, the rotor 670 rotates counter-clockwise under the pressing force of the spring 772 from the second state P2 to the first state P1. When the rotor 670 is in the first state P1, the second magnets M2 of the shutter lock 80 change to the restricted position Q1.

As shown in FIG. 29, when the shutter cam 662 comes into contact with the operation cam 675, clockwise rotation of the shutter 660 is restricted.

In the state in FIG. 29, when the cylinder key 102 of the multiple key 100 is inserted into the cylinder key insertion hole 74, and the convex component 92 of the multiple key 100 is engaged with the concave component 77 of the rotor 670, the second magnets M2 of the shutter lock 80 change from the restricted position Q1 to the permitted position Q2. When the second magnets M2 change to the permitted position Q2, the rotor 670 enters a state of being able to rotate clockwise.

As the rotor 670 is rotated clockwise against the force of the spring 772, the contact between the operation cam 675 and the shutter cam 662 is temporarily released, and the shutter 660 is permitted to rotate in the left and right direction. Since the shutter 660 is being pushed clockwise by the spring 771, when the contact between the operation cam 675 and the shutter cam 662 is released, the shutter 660 rotates to the open position S2.

When the rotor 670 rotates to the open position S2 under the biasing force of the spring 772, it returns to the state shown in FIG. 27.

### Effect of Embodiment 7

With the lock system 630 in this embodiment, the shutter 660 and the rotor 670 of the lock device 640 are separate members, and not integrated. With the lock system 630 in this embodiment, the cylinder key 102 of the multiple key 100 is inserted into the cylinder key insertion hole 74, the convex component 92 of the multiple key 100 is engaged with the concave component 77 of the rotor 670, and the multiple key 100 is turned, which moves the shutter 660 and opens up the first keyhole 52 of the cylinder lock 50. Also, the cylinder lock 50 can be operated by pulling the multiple key 100 out of the concave component 77 and the cylinder key insertion hole 74 of the rotor 670, and inserting the cylinder key 102 into the first keyhole 52 of the cylinder lock 50. The user can operate the rotor 670 and the cylinder lock 50 without changing the holding position of the multiple key 100, in the orientation of inserting the cylinder key 102. Therefore, the locking device 640 can be operated without changing the holding position of the multiple key 100, and the lock device 640 can be smoothly operated with the multiple key 100.

### Other Embodiments

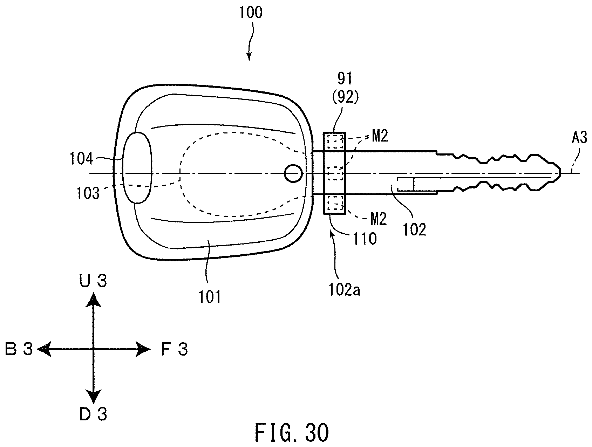

In the above embodiments, a case in which the magnet key 110 and the grip 101 were formed integrally was described, but they may instead be formed separately. In this case, as long as the magnet key is provided around the proximal end 102a of the cylinder key 102, it may be in contact with the grip 101, or, as shown in FIG. 30, it may be apart from the grip 101 in the direction in which the cylinder key 102 extends.

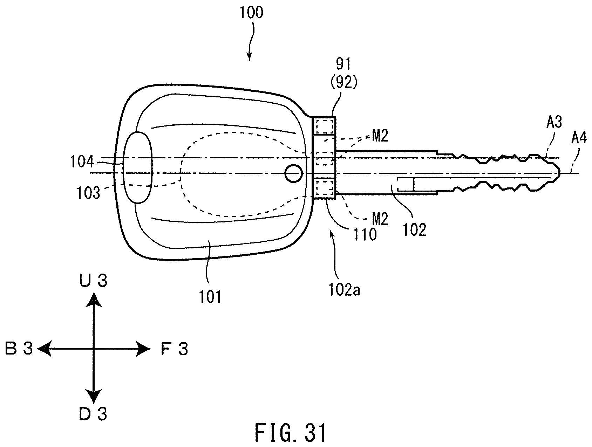

In the above embodiments, a case in which the rotational axis A3 of the magnet key 110 overlapped the rotational axis of the cylinder key 102, but as shown in FIG. 31, the magnet key 110 may instead be provided around the proximal end 102a of the cylinder key 102. As long as the rotational axis A3 is facing in the direction in which the cylinder key 102 extends, it need not overlap the rotational axis A4 of the cylinder key 102. In this case, the cylinder key insertion hole of the rotor may be formed so as to extend in the peripheral direction around the rotational axis of the rotor.

The motorcycle 10 described as an example of a straddle-type vehicle in these embodiments was a scooter type in which the power unit 18 is able to pivot with respect to the body frame 15, but the present teaching can also be applied to other types of straddle-type vehicle. For instance, it may be a so-called underbone type in which the engine is fixed to the frame, or may be a sports type in which the rider's legs straddle the body (knee grip). Also, the straddle-type vehicle is not limited to a two-wheeled vehicle. For example, it may be a vehicle with three or more wheels. Furthermore, it may be an ATV (all terrain vehicle) or a snowmobile.

## Claims

1. A lock system comprising a lock device (40, 140, 240, 340, 440, 540, 640) having a plurality of locks, and a multiple key (100, 200, 300, 400, 500) provided with lock/unlock functions for a plurality of locks,
wherein the lock device (40, 140, 240, 340, 440, 540, 640) comprises:
a casing (42, 53, 642, 653) having a first opening (44) and a second opening (45);
a cylinder lock (50) that includes one end in which is formed a first keyhole (52) into which the multiple key (100, 200, 300, 400, 500) is adapted to be inserted, and that is covered by the casing (42, 53, 642, 653) so that the first keyhole (52) overlaps the first opening (44) when viewed in a first axial direction of the first keyhole (52); and
a shutter mechanism (6) having a first shutter (60) that is adapted to move between a closed position (PC1) at which the first keyhole (52) is blocked off and an open position (PC2) at which the first keyhole (52) is open, and a shutter lock (80, 280, 480) is adapted to operate the first shutter (60),
the shutter lock (80, 280, 480) comprises:
a rotor (70, 170); and
a second keyhole (72, 74) that is covered by the casing (42, 53, 642, 653) so that the second keyhole (72, 74) overlaps the second opening (45) when viewed in a second axial direction, and that is adapted to rotate in the circumferential direction of the second axis; and
at least one first magnet (M1) is adapted to switch positions between a restricted position (Q1) at which the rotation of the rotor (70, 170) is restricted, and a permitted position (Q2) at which the rotation of the rotor (70, 170) is permitted,
the rotor (70, 170) is adapted to rotate in a first state (P1) and a second state (P2), in the first state (P1) the first shutter (60) is positioned in the closed position (PC1), and in the second state (P2) the first shutter (60) is positioned in the open position (PC2),
the multiple key (100, 200, 300, 400, 500) comprises:
a grip (101, 301, 401);
a cylinder key (102) that extends from the grip (101, 301, 401) and that is adapted to be inserted into the first keyhole (52) and is adapted to lock and unlock the cylinder lock (50), **characterized in that** the rotor (70, 170) includes one end in which is formed the second keyhole (72, 74) into which the multiple key (100, 200, 300, 400, 500) is adapted to be inserted, and
a magnet key (110, 210, 410) is provided around the proximal end of the cylinder key (102), the magnet key (110, 210, 410) has a base component (91) in which a rotational axis is set in the direction in which the cylinder key (102) extends and at least one second magnet (M2) provided to the base component (91), and with which the position of the first magnet (M1) can be switched by the magnetic force of the second magnet (M2) from the restricted position (Q1) to the permitted position (Q2),
the cylinder key (102) is adapted to be inserted into the second keyhole (72, 74) of the rotor (70, 170),
in a state in which the cylinder key (102) has been inserted into the second keyhole (72, 74) of the rotor (70, 170), the magnet key (110, 210, 410) is adapted to switch the position of the first magnet (M1) of the shutter lock (80, 280, 480) from the restricted position (Q1) to the permitted position (Q2), and
in a state in which the cylinder key (102) has been inserted into the second keyhole (72, 74) of the rotor (70, 170), the rotor (70, 170) is adapted to be rotated from the first state (P1) to the second state (P2) by turning the multiple key (100, 200, 300, 400, 500).

2. A lock system according to claim 1, **characterized in that** the multiple key (100, 200, 300, 400, 500) has a shape that allows engagement with the second keyhole (72, 74) of the rotor (70, 170), and
in a state in which the cylinder key (102) has been inserted into the second keyhole (72, 74) and the multiple key (100, 200, 300, 400, 500) has been engaged with the second keyhole (72, 74), the rotor (70, 170) is adapted to be rotated from the first state (P1) to the second state (P2) by turning the multiple key (100, 200, 300, 400, 500).

3. A lock system according to claim 1 or 2, **characterized in that** in a state in which the cylinder key (102) has been inserted into the second keyhole (72, 74), the cylinder key (102) is adapted to be brought into contact with a peripheral wall of the second keyhole (72, 74), and the rotor (70, 170) is adapted to be rotated from the first state (P1) to the second state (P2), by turning the cylinder key (102).

4. A lock system according to any of claims 1 to 3, **characterized in that** the base component (91) of the magnet key (110, 210, 410) has a convex component (92) that protrudes toward the periphery of the rotational axis,
the second keyhole (72, 74) of the rotor (70, 170) has a concave component (77) that engages with the convex component (92), and
in a state in which the cylinder key (102) has been inserted into the second keyhole (72, 74), the convex component (92) is adapted to be brought into contact with the peripheral walls of the concave component (77) of the second keyhole (72, 74), and the rotor (70, 170) is adapted to be rotated from the first state (P1) to the second state (P2), by turning the cylinder key (102).

5. A lock system according to any of claims 1 to 4, **characterized in that** the second axial direction of the second keyhole (72, 74) extends in the first axial direction of the first keyhole (52).

6. A lock system according to any of claims 1 to 5, **characterized in that** the second magnet (M2) is disposed so that the direction in which the poles extend faces in the direction in which the cylinder key (102) extends, and
the first magnet (M1) of the shutter lock (80, 280, 480) is disposed facing in the second axial direction so as to correspond to the second magnet (M2).

7. A lock system according to any of claims 1 to 5, **characterized in that** the second magnet (M2) is disposed so that the direction in which the poles extend intersects the direction in which the cylinder key (102) extends, and
the first magnet (M1) of the shutter lock (80, 280, 480) is disposed facing in a direction that intersects the second axial direction so as to correspond to the second magnet (M2).

8. A lock system according to any of claims 1 to 7, **characterized in that** the magnet key (110, 210, 410) is provided to the proximal end of the cylinder key (102).

9. A lock system according to any of claims 1 to 8, **characterized in that** the magnet key (110, 210, 410) is provided integrally with the grip (101, 301, 401) of the cylinder key (102).

10. A lock system according to any of claims 1 to 9, **characterized in that** the rotational axis of the magnet key (110, 210, 410) overlaps the rotational axis of the cylinder key (102).

11. A lock system according to any of claims 1 to 10, **characterized in that** the grip (101, 301, 401) has an attachment hole (104, 304) formed at a location that is offset with respect to the center axis of the cylinder key (102).

12. A lock system according to any of claims 1 to 11, **characterized in that** an orientation in which the cylinder key (102) has been inserted into the second keyhole (72, 74) of the rotor (70, 170) is called a first orientation (PS1), and an orientation in which the cylinder key (102) has been turned 180 degrees around its center axis with respect to the first orientation (PS1) and has been inserted into the second keyhole (72, 74) of the rotor (70, 170) is called a second orientation (PS2), and
in both the first orientation (PS1) and the second orientation (PS2), the first magnet (M1) and the second magnet (M2) are disposed so that the second magnet (M2) of the magnet key (110, 210, 410) switches the position of the first magnet (M1) of the shutter lock (80, 280, 480) from the restricted position (Q1) to the permitted position (Q2).

13. A lock system according to any of claims 1 to 12, **characterized in that** the rotor (70, 170) is adapted to move between a closed position (PC1) at which the second keyhole (72, 74) is blocked off and an open position (PC2) at which the second keyhole (72, 74) is open, and has a second shutter (572) that is adapted to move from the closed position (PC1) to the open position (PC2) when the cylinder key (102) is inserted into the second keyhole (72, 74).

14. A lock system according to any of claims 1 to 13, **characterized in that** the direction in which the cylinder key (102) is inserted into the second keyhole (72, 74) is called an insertion direction, and the casing (42, 53, 642, 653) comprises a bottomed container (566) that extends in the insertion direction from the periphery of the second keyhole (72, 74).

15. A straddle-type vehicle comprising the lock system according to any of claims 1 to 14.

## Patentansprüche

1. Ein Schließ-System, das eine Schließ-Vorrichtung (40, 140, 240, 340, 440, 540, 640), die eine Mehrzahl von Schlösser hat, und einen Mehrfach-Schlüssel (100, 200, 300, 400, 500), der mit Verriegel/Entriegel-Funktionen für eine Mehrzahl von Schlösser vorgesehen ist, umfasst,
wobei die Schließ-Vorrichtung (40, 140, 240, 340, 440, 540,640) umfasst:
ein Gehäuse (42, 53, 642, 653), das eine erste Öffnung (44) und eine zweite Öffnung (45) hat;
ein Zylinder-Schloß (50), das ein Ende beinhaltet, indem ein erstes Schlüsselloch (52) ausgebildet ist, in welches der Mehrfach-Schlüssel (100, 200, 300, 400, 500) angepaßt ist, eingesetzt zu werden, und das durch das Gehäuse (42, 53, 642, 653) abgedeckt ist, so dass das erste Schlüsselloch (52) mit der ersten Öffnung (44) überlappt, wenn in eine erste Axialrichtung des ersten Schlüssellochs (52) betrachtet; und
einen Verschluss-Mechanismus (6), der einen ersten Verschluss (60) hat, der angepaßt ist, um sich zwischen einer geschlossenen Position (PC1), in welcher das erste Schlüsselloch (52) blockiert ist, und einer offenen Position (PC2), in welcher das erste Schlüsselloch (52) offen ist, bewegt, und ein Verschluss-Schloss (80, 280, 480) ist angepaßt, um den ersten Verschluss (60) zu betätigen,
das Verschluss-Schloss (80, 280, 480) umfasst:
einen Rotor (70, 170); und
ein zweites Schlüsselloch (72, 74), das durch das Gehäuse (42, 53, 642, 653) abgedeckt ist, sodass das zweite Schlüsselloch (72, 74) die zweite Öffnung (45) überlappt, wenn in eine zweite Axialrichtung betrachtet, und das angepaßt ist in die Umfangsrichtung der zweiten Achse zu drehen; und
zumindest ein erster Magnet (M1) ist angepaßt, um Positionen zwischen einer beschränkten Position (Q1), in welcher die Drehung des Rotors (70, 170) beschränkt ist, und einer zugelassenen Position (Q2), in welcher die Drehung des Rotors (70, 170) zugelassen ist, zu schalten,
der Rotor (70/170) ist angepaßt in einen ersten Zustand (P1) und einen zweiten Zustand (P2) zu drehen, in dem ersten Zustand (P1) ist der erste Verschluss (60) in der geschlossenen Position (PC1) positioniert, und in dem zweiten Zustand (P2) ist der erste Verschluss (60) in der offenen Position (PC2) positioniert,
der Mehrfach-Schlüssel (100, 200, 300, 400, 500) umfasst:
einen Griff (101, 301, 401);
einen Zylinderschlüssel (102), der sich von dem Griff (101, 301, 401) erstreckt und der angepaßt ist, um in das erste Schlüsselloch (52) eingesetzt zu werden, und der angepaßt ist, das Zylinder-Schloß (50) zu verriegeln und zu entriegeln, **dadurch gekennzeichnet, dass**
der Rotor (70, 170) ein Ende beinhaltet, in welches das zweite Schlüsselloch (72, 74) ausgebildet ist, in welches der Mehrfach-Schlüssel (100, 200, 300, 400, 500) angepaßt ist, eingesetzt zu werden, und
ein Magnetschlüssel (110, 210, 410) ist um das nahe Ende des Zylinderschlüssels (102) vorgesehen, der Magnetschlüssel (110, 210, 410) hat eine Basiskomponente (91), in welche eine Drehachse in die Richtung, in welcher sich der Zylinderschlüssel (102) erstreckt, gesetzt ist, und zumindest ein zweiter Magnet (M2) ist an der Basiskomponente (91) vorgesehen, und mit dem die Position des ersten Magneten (M1) durch die Magnetkraft des zweiten Magneten (M2) von der beschränkten Position (Q1) zu der zugelassenen Position (Q2) geschaltet werden kann,
der Zylinderschlüssel (102) ist angepaßt, um in das zweite Schlüsselloch (72, 74) des Rotors (70,170) eingesetzt zu werden,
in einem Zustand, in welchem der Zylinderschlüssel (102) in das zweite Schlüsselloch (72, 74) des Rotors (70, 170) eingesetzt worden ist, ist der Magnetschlüssel (110, 210, 410) angepaßt, um die Position des ersten Magneten (M1) des Verschluss-Schlosses (80, 280, 480) von der beschränkten Position (Q1) zu der zugelassenen Position (Q2) zu schalten, und
in einem Zustand, in dem der Zylinderschlüssel (102) in das zweite Zylinder-Schloß (72, 74) des Rotors (70, 170) eingesetzt worden ist, ist der Rotor (70, 170) angepaßt, um von dem ersten Zustand (P1) zu dem zweiten Zustand (P2), durch Drehen des Mehrfach-Schlüssels (100, 200, 300, 400, 500), zu drehen.

2. Ein Schließ-System gemäß Anspruch 1, **dadurch gekennzeichnet, dass** der Mehrfach-Schlüssel (100, 200, 300, 400, 500) eine Form hat, welche Eingriff mit dem zweiten Schüsselloch (72, 74) des Rotors (70, 170) erlaubt, und
in einem Zustand, in welchem der Zylinderschlüssel (102) in das zweite Schlüsselloch (72, 74) eingesetzt worden ist, und der Mehrfach-Schlüssel (100,2 00, 300, 400, 500) mit dem zweiten Zylinder-Schloß (72, 74) in Eingriff gebracht ist, ist der Rotor (70, 170) angepaßt, um von dem ersten Zustand (P1) zu dem zweiten Zustand (P2), durch Drehen des Mehrfach-Schlüssels (100, 200, 300, 400, 500), zu drehen.

3. Ein Schließ-System gemäß Anspruch 1 oder 2, **dadurch gekennzeichnet, dass** in einem Zustand, in weichem der Zylinderschlüssel (102) in das zweite Zylinder-Schloß (72, 74) eingesetzt worden ist, ist der Zylinderschlüssel (102) angepaßt, um in Kontakt mit einer Umfangswand des zweiten Schlüssellochs (72, 74) gebracht zu werden, und der Rotor (70, 170) ist angepaßt, um von dem erste Zustand (P1) zu dem zweiten Zustand (P2) durch Drehen des Zylinderschlüssels (102) gedreht zu werden.

4. Ein Schließ-System gemäß irgendeinem der Ansprüche 1 bis 3, **dadurch gekennzeichnet, dass** die Basiskomponente (91) des Magnetschlüssels (110, 210, 410) eine konvexe Komponente (92) hat, die zu dem Umfang der Drehachse vorsteht,
das zweite Schlüsselloch (72, 74) des Rotors (70, 170) hat eine konkave Komponente (77), die mit der konvexen Komponente (92) eingreift, und
in einem Zustand, in welchem der Zylinderschlüssel (102) in das zweite Schlüsselloch (72, 74) eingesetzt worden ist, ist die konvexe Komponente (92) angepaßt, um in Kontakt mit den Umfangswänden der konkaven Komponente (77) des zweiten Schlüssellochs (72, 74) gebracht zu werden, und der Rotor (70, 170) ist angepaßt, um von dem ersten Zustand (P1) zu dem zweiten Zustand (P2), durch Drehen des Zylinderschlüssels (102), zu drehen.

5. Ein Schließ-System gemäß irgendeinem der Ansprüche 1 bis 4, **dadurch gekennzeichnet, dass** die zweite Axialrichtung des zweiten Schlüssellochs (72, 74) sich in der ersten Axialrichtung des ersten Schlüssellochs (52) erstreckt.

6. Ein Schließ-System gemäß irgendeinem der Ansprüche 1 bis 5, **dadurch gekennzeichnet, dass** der zweite Magnet (M2) positioniert ist, sodass die Richtung in welche die Pole sich erstrecken, in die Richtung gerichtet ist, in welche sich der Zylinderschlüssel (102) erstreckt, und
der erste Magnet (M1) des Verschluss-Schlosses (80, 280, 480) ist zugewandt in der zweiten Axialrichtung positioniert, so dass dieser mit dem zweiten Magnet (M2) korrespondiert.

7. Ein Schließ-System gemäß irgendeinem der Ansprüche 1 bis 5, **dadurch gekennzeichnet, dass** der zweite Magnet (M2) positioniert ist, sodass die Richtung, in welcher sich die Pole erstrecken, die Richtung in welcher sich der Zylinderschlüssel 102 erstreckt, schneidet, und
der erste Magnet (M1) des Verschluss-Schlosses (80, 280, 480) ist zugewandt in einer Richtung positioniert, welche die zweite Axialrichtung schneidet, so dass diese zu dem zweiten Magnet (M2) korrespondiert.

8. Ein Schließ-System gemäß irgendeinem der Ansprüche 1 bis 7, **dadurch gekennzeichnet, dass** der Magnetschlüssel (110, 210, 410) an dem nahen Ende des Zylinderschlüssels (102) vorgesehen ist.

9. Ein Schließ-System gemäß irgendeinem der Ansprüche 1 bis 8, **dadurch gekennzeichnet, dass** der Magnetschlüssel (110, 210, 410) integral mit dem Griff (101, 301, 401) des Zylinderschlüssels (102) vorgesehen ist.

10. Ein Schließ-System gemäß irgendeinem der Ansprüche 1 bis 9, **dadurch gekennzeichnet, dass** die Drehachse des Magnetschlüssels (110, 210, 410) mit der Drehachse des Zylinderschlüssels (102) überlappt.

11. Ein Schließ-System gemäß irgendeinem der Ansprüche 1 bis 10, **dadurch gekennzeichnet, dass** der Griff (101, 301, 401) ein Anbringungsloch (104, 304) hat, das an einem Ort, versetzt mit Bezug auf die Mittenachse des Zylinderschlüssels (102) ausgebildet ist.

12. Ein Schließ-System gemäß irgendeinem der Ansprüche 1 bis 11, **dadurch gekennzeichnet, dass** eine Orientierung, in welche der Zylinderschlüssel (102) in das zweite Schlüsselloch (72, 74) des Rotors (70, 170) eingesetzt worden ist, eine erste Orientierung (PS1) genannt ist, und eine Orientierung, in welcher der Zylinderschlüssel (102) um 180 Grad um dessen Mittenachse gedreht worden ist mit Bezug auf die erste Orientierung (PS1) und in das zweite Zylinderloch (72, 74) des Rotors (70, 170) eingesetzt worden ist, eine zweite Orientierung (PS2) genannt ist, und
in beiden, der ersten Orientierung (PS1) und der zweiten Orientierung (PS2) sind der erste Magnet (M1) und der zweite Magnet (M2) positioniert, sodass der zweite Magnet (M2) des Magnetschlüssels (110, 210, 410) die Position des ersten Magneten (M1) des Verschluss-Schlosses (80, 280, 480) von der beschränkten Position (Q1) zu der zugelassenen Position (Q2) schaltet.

13. Ein Schließ-System gemäß irgendeinem der Ansprüche 1 bis 12, **dadurch gekennzeichnet, dass** der Rotor (70, 170) angepaßt ist, um sich zwischen einer geschlossenen Position (PC1), in welcher das zweite Schlüsselloch (72, 74) blockiert ist, und einer offenen Position (PC2), in welcher das zweite Schlüsselloch (72, 74) offen ist, bewegt, und hat einen zweiten Verschluss (572), der angepaßt ist, um sich von der geschlossenen Position (PC1) zu der offenen Position (PC2) zu bewegen, wenn der Zylinderschlüssel (102) in das zweite Zylinder-Schloß (72, 74) eingesetzt ist.

14. Ein Schließ-System gemäß irgendeinem der Ansprüche 1 bis 13, **dadurch gekennzeichnet, dass** die Richtung, in welcher der Zylinderschlüssel (102) in das zweite Schlüsselloch (72,74) eingesetzt ist, eine Einsetzrichtung genannt ist, und das Gehäuse (42, 53, 642, 653) einen Bodencontainer (566) umfasst, der sich in die Einsetzrichtung von dem Umfang des zweiten Schlüssellochs (72, 74) erstreckt.

15. Spreiz-Sitz-Typ-Fahrzeug, das ein Schließ-System gemäß irgendeinem der Ansprüche 1 bis 14 umfasst.

## Revendications

1. Système de serrure comprenant un dispositif de verrouillage (40, 140, 240, 340, 440, 540, 640) comportant une pluralité de verrous et une clé multiple (100, 200, 300, 400, 500) pourvue de fonctions de verrouillage/déverrouillage pour une pluralité de verrous,
dans lequel le dispositif de verrouillage (40, 140, 240, 340, 440, 540, 640) comprend :
un boîtier (42, 53, 642, 653) comportant une première ouverture (44) et une deuxième ouverture (45) ;
une serrure à cylindre (50) qui comprend une extrémité dans laquelle est formé un premier trou de serrure (52) dans lequel la clé multiple (100, 200, 300, 400, 500) est adaptée pour être insérée, et qui est recouvert par le boîtier (42, 53, 642, 653) de telle sorte que le premier trou de serrure (52) chevauche la première ouverture (44) lorsqu'elle est vue dans une première direction axiale du premier trou de serrure (52) ; et
un mécanisme d'obturation (6) comportant un premier obturateur (60) qui est adapté pour se déplacer entre une position fermée (PC1) dans laquelle le premier trou de serrure (52) est bloqué et une position ouverte (PC2) dans laquelle le premier trou de serrure (52) est ouvert, et un verrouillage d'obturateur (80, 280, 480) qui est adapté pour actionner le premier obturateur (60),
le verrouillage d'obturateur (80, 280, 480) comprenant :
un rotor (70, 170) ; et
un deuxième trou de serrure (72, 74) qui est recouvert par le boîtier (42, 53, 642, 653) de telle sorte que le deuxième trou de serrure (72, 74) chevauche la deuxième ouverture (45) vu selon une deuxième direction axiale, et qui est adapté pour tourner en direction circonférentielle du deuxième axe ; et
au moins un premier aimant (M1) est adapté pour commuter de position entre une position restreinte (Q1) dans laquelle la rotation du rotor (70, 170) est restreinte et une position permise (Q2) dans laquelle la rotation du rotor (70, 170) est permise,
le rotor (70, 170) est adapté pour tourner dans un premier état (P1) et dans un deuxième état (P2), dans le premier état (P1) le premier obturateur (60) est positionné dans la position fermée (PC1), et dans le deuxième état (P2) le premier obturateur (60) est positionné dans la position ouverte (PC2),
la clé multiple (100, 200, 300, 400, 500) comprend :
une poignée (101, 301,401) ;
une clé à cylindre (102) qui s'étend depuis la poignée (101, 301, 401), qui est adaptée pour être insérée dans le premier trou de serrure (52) et qui est adaptée pour verrouiller et déverrouiller la serrure à cylindre (50), **caractérisé en ce que**
le rotor (70, 170) comprend une extrémité dans laquelle est formé le deuxième trou de serrure (72, 74) dans lequel la clé multiple (100, 200, 300, 400, 500) est adaptée pour être insérée, et
une clé aimantée (110, 210, 410) est pourvue autour de l'extrémité proximale de la clé à cylindre (102), la clé aimantée (110, 210, 410) comporte un composant de base (91) dans lequel un axe de rotation est agencé dans la direction où s'étend la clé à cylindre (102) et au moins un deuxième aimant (M2) pourvu sur le composant de base (91), et avec lequel la position du premier aimant (M1) peut être commutée par la force magnétique du deuxième aimant (M2) de la position restreinte (Q1) à la position permise (Q2),
la clé à cylindre (102) est adaptée pour être insérée dans le deuxième trou de serrure (72, 74) du rotor (70, 170),
dans un état où la clé à cylindre (102) a été insérée dans le deuxième trou de serrure (72, 74) du rotor (70, 170), la clé aimantée (110, 210, 410) est adaptée pour commuter la position du premier aimant (M1) du verrouillage d'obturateur (80, 280, 480) de la position restreinte (Q1) à la position permise (Q2), et
dans un état où la clé à cylindre (102) a été insérée dans le deuxième trou de serrure (72, 74) du rotor (70, 170), le rotor (70, 170) est adapté pour être pivoté du premier état (P1) au deuxième état (P2) en faisant tourner la clé multiple (100, 200, 300, 400, 500).

2. Système de serrure selon la revendication 1, **caractérisé en ce que** la clé multiple (100, 200, 300, 400, 500) présente une forme qui permet un engagement avec le deuxième trou de serrure (72, 74) du rotor (70, 170), et
dans un état où la clé à cylindre (102) a été insérée dans le deuxième trou de serrure (72, 74) et la clé multiple (100, 200, 300, 400, 500) a été engagée dans le deuxième trou de serrure (72, 74), le rotor (70, 170) est adapté pour être pivoté du premier état (P1) au deuxième état (P2) en faisant tourner la clé multiple (100, 200, 300, 400, 500).

3. Système de serrure selon la revendication 1 ou 2, **caractérisé en ce que** dans un état où la clé à cylindre (102) a été insérée dans le deuxième trou de serrure (72, 74), la clé à cylindre (102) est adaptée pour être amenée en contact avec une paroi périphérique du deuxième trou de serrure (72, 74), et le rotor (70, 170) est adapté pour être pivoté du premier état (P1) au deuxième état (P2) en faisant tourner la clé à cylindre (102).

4. Système de serrure selon l'une quelconque des revendications 1 à 3, **caractérisé en ce que** le composant de base (91) de la clé aimantée (110, 210, 410) comporte un composant convexe (92) qui ressort vers la périphérie de l'axe de rotation,
le deuxième trou de serrure (72, 74) du rotor (70, 170) comporte un composant concave (77) qui s'engage avec le composant convexe (92), et
dans un état où la clé à cylindre (102) a été insérée dans le deuxième trou de serrure (72, 74), le composant convexe (92) est adapté pour être amené en contact avec les parois périphériques du composant concave (77) du deuxième trou de serrure (72, 74), et le rotor (70, 170) est adapté pour être pivoté du premier état (P1) au deuxième état (P2) en faisant tourner la clé à cylindre (102).

5. Système de serrure selon l'une quelconque des revendications 1 à 4, **caractérisé en ce que** la deuxième direction axiale du deuxième trou de serrure (72, 74) s'étend dans la première direction axiale du premier trou de serrure (52).

6. Système de serrure selon l'une quelconque des revendications 1 à 5, **caractérisé en ce que** le deuxième aimant (M2) est agencé de telle sorte que la direction dans laquelle s'étendent les pôles fait face à la direction dans laquelle s'étend la clé à cylindre (102), et
le premier aimant (M1) du verrouillage d'obturateur (80, 280, 480) est agencé de manière à faire face à la deuxième direction axiale de manière à correspondre au deuxième aimant (M2).

7. Système de serrure selon l'une quelconque des revendications 1 à 5, **caractérisé en ce que** le deuxième aimant (M2) est agencé de telle sorte que la direction dans laquelle s'étendent les pôles intersecte la direction dans laquelle s'étend la clé à cylindre (102), et
le premier aimant (M1) du verrouillage d'obturateur (80, 280, 480) est agencé pour faire face à une direction qui intersecte la deuxième direction axiale de manière à correspondre au deuxième aimant (M2).

8. Système de serrure selon l'une quelconque des revendications 1 à 7, **caractérisé en ce que** la clé aimantée (110, 210, 410) est pourvue à l'extrémité proximale de la clé à cylindre (102).

9. Système de serrure selon l'une quelconque des revendications 1 à 8, **caractérisé en ce que** la clé aimantée (110, 210, 410) est pourvue de manière intégrée avec la poignée (101, 301,401) de la clé à cylindre (102).

10. Système de serrure selon l'une quelconque des revendications 1 à 9, **caractérisé en ce que** l'axe de rotation de la clé aimantée (110, 210, 410) chevauche l'axe de rotation de la clé à cylindre (102).

11. Système de serrure selon l'une quelconque des revendications 1 à 10, **caractérisé en ce que** la poignée (101, 301, 401) comporte un trou de fixation (104, 304) formé à une position qui est décalée par rapport à l'axe central de la clé à cylindre (102).

12. Système de serrure selon l'une quelconque des revendications 1 à 11, **caractérisé en ce que** une orientation dans laquelle la clé à cylindre (102) a été insérée dans le deuxième trou de serrure (72, 74) du rotor (70, 170) est appelée première orientation (PS1), et une orientation dans laquelle la clé à cylindre (102) a été pivotée de 180 degrés autour de son axe central par rapport à la première orientation (PS1) et été insérée dans le deuxième trou de serrure (72, 74) du rotor (70, 170) est appelée deuxième orientation (PS2), et
dans la première orientation (PS1) et la deuxième orientation (PS2), le premier aimant (M1) et le deuxième aimant (M2) sont agencés de telle sorte que le deuxième aimant (M2) de la clé aimantée (110, 210, 410) commute la position du premier aimant (M1) du verrouillage d'obturateur (80, 280, 480) de la position restreinte (Q1) à la position permise (Q2).

13. Système de serrure selon l'une quelconque des revendications 1 à 12, **caractérisé en ce que** le rotor (70, 170) est adapté pour se déplacer entre une position fermée (PC1) dans laquelle le deuxième trou de serrure (72, 74) est bloqué et une position ouverte (PC2) dans laquelle le deuxième trou de serrure (72, 74) est ouvert, et comporte un deuxième obturateur (572) qui est adapté pour se déplacer de la position fermée (PC1) à la position ouverte (PC2) quand la clé à cylindre (102) est insérée dans le deuxième trou de serrure (72, 74).

14. Système de serrure selon l'une quelconque des revendications 1 à 13, **caractérisé en ce que** la direction dans laquelle la clé à cylindre (102) est insérée dans le deuxième trou de serrure (72, 74) est appelée direction d'insertion, et le boîtier (42, 53, 642, 653) comprend un conteneur à fond (566) qui s'étend dans la direction d'insertion depuis la périphérie du deuxième trou de serrure (72, 74).

15. Véhicule de type à enfourcher comprenant le système de serrure selon l'une quelconque des revendications 1 à 14.
